# EUROPEAN PATENT APPLICATION

(11) **EP 4 485 220 A1**
(43) Date of publication of application: **01.01.2025**
(21) Application number: 23210316.8
(22) Date of filing: 16.11.2023
(51) Int. Cl.: G06F 13/42

(54) **STREAMING FABRIC INTERFACE**

(30) Priority: 30.06.2023 US 202318345208
(71) Applicant: Intel Corporation, Santa Clara, CA 95054 (US)
(72) Inventor: ALI, Mohannad Fahim, San Jose, CA, 95117 (US); CHOUDHARY, Swadesh, Mountain View, CA, 94041 (US); PHILIP, Joji, San Jose, CA, 95135 (US); HARRIMAN, David J., Portland, OR, 97201 (US)
(74) Representative: Maiwald GmbH

(57) **Abstract**

An interface for coupling an agent to a fabric supports a load/store interconnect protocol, where the I/O interconnect protocol includes a flit mode and a non-flit mode. A set of flit mode header formats are used when in the flit mode and a set of non-flit mode header formats are used when in the non-flit mode, the set of non-flit mode header formats including one or more non-flit mode fields. Interface logic determines that a link is trained to the non-flit mode and generates a header according to the set of flit mode header formats, where the header includes a field to indicate that a corresponding packet originated as a non-flit mode packet. One or more fields of the set of flit mode header formats are repurposed in the header to carry the one or more non-flit mode fields before sending the modified header over the interface.

## Description

### FIELD

This disclosure pertains to computing system, and in particular (but not exclusively) to point-to-point interconnects.

### BACKGROUND

Advances in semi-conductor processing and logic design have permitted an increase in the amount of logic that may be present on integrated circuit devices. As a corollary, computer system configurations have evolved from a single or multiple integrated circuits in a system to multiple cores, multiple hardware threads, and multiple logical processors present on individual integrated circuits, as well as other interfaces integrated within such processors. A processor or integrated circuit typically comprises a single physical processor die, where the processor die may include any number of cores, hardware threads, logical processors, interfaces, memory, controller hubs, etc.

As a result of the greater ability to fit more processing power in smaller packages, smaller computing devices have increased in popularity. Smartphones, tablets, ultrathin notebooks, and other user equipment have grown exponentially. However, these smaller devices are reliant on servers both for data storage and complex processing that exceeds the form factor. Consequently, the demand in the high-performance computing market (i.e. server space) has also increased. For instance, in modern servers, there is typically not only a single processor with multiple cores, but also multiple physical processors (also referred to as multiple sockets) to increase the computing power. But as the processing power grows along with the number of devices in a computing system, the communication between sockets and other devices becomes more critical.

In fact, interconnects have grown from more traditional multi-drop buses that primarily handled electrical communications to full blown interconnect architectures that facilitate fast communication. Unfortunately, as the demand for future processors to consume at even higher-rates corresponding demand is placed on the capabilities of existing interconnect architectures.

### BRIEF DESCRIPTION OF THE DRAWINGS

FIG. 1 is a simplified block diagram illustrating an example embodiment of a system on chip (SoC) device.
FIG. 2 is a simplified block diagram of an streaming fabric interface.
FIG. 3 is a simplified block diagram of another example streaming fabric interface.
FIG. 4 is a simplified block diagram illustrating an example Compute Express Link (CXL) topology.
FIG. 5 is a simplified block diagram of channels of an example streaming fabric interface.
FIG. 6 is a simplified block diagram illustrating an example receiver buffer.
FIG. 7 is a representation of example fields in metadata for a header channel of a streaming fabric interface.
FIG. 8 is a timing diagram illustrating example data flow on a header channel of an example streaming fabric interface.
FIG. 9 is a timing diagram illustrating example data flow on a data channel of an example streaming fabric interface.
FIG. 10 is a diagram illustrating an example initialization state machine for an example flexible on-die fabric interface.
FIG. 11 is a timing diagram illustrating initialization of an example flexible on-die fabric interface.
FIG. 12 is a timing diagram illustrating a first example of a disconnect flow in an example flexible on-die fabric interface.
FIG. 13 is a timing diagram illustrating a second example of a disconnect flow in an example flexible on-die fabric interface.
FIG. 14 is a simplified block diagram of an example computing system.
FIGS. 15A-15D illustrate example portions of a header of a flit mode packet.
FIG. 16 illustrates example packet headers.
FIG. 17 illustrates an example computing system including a credit gasket.
FIG. 18 is a timing diagram illustrating example use of a credit gasket.
FIGS. 19A-19B are timing diagrams illustrating additional example uses of a credit gasket.
FIG. 20 is a diagram illustrating logic of an example credit gasket.
FIG. 21 is a timing diagram illustrating example use of a credit gasket.
FIGS. 22A-22B are timing diagrams illustrating additional example uses of a credit gasket.
FIG. 23 is a simplified block diagram of an example computing system including a bufferless arbiter.
FIGS. 24A-24D are timing diagrams illustrating example uses of an arbiter in a computing system.
FIG. 25 illustrates an embodiment of a block diagram for a computing system including a multicore processor.
FIG. 26 illustrates another embodiment of a block diagram for a computing system.

### DETAILED DESCRIPTION

In the following description, numerous specific details are set forth, such as examples of specific types of processors and system configurations, specific hardware structures, specific architectural and micro architectural details, specific register configurations, specific instruction types, specific system components, specific measurements/heights, specific processor pipeline stages and operation etc. in order to provide a thorough understanding of the present disclosure. It will be apparent, however, to one skilled in the art that these specific details need not be employed to practice the embodiments of the present disclosure. In other instances, well known components or methods, such as specific and alternative processor architectures, specific logic circuits/code for described algorithms, specific firmware code, specific interconnect operation, specific logic configurations, specific manufacturing techniques and materials, specific compiler implementations, specific expression of algorithms in code, specific power down and gating techniques/logic and other specific operational details of computer system haven't been described in detail in order to avoid unnecessarily obscuring the present disclosure.

Although the following embodiments may be described with reference to efficient high-speed data transmission and configurability in specific integrated circuits, such as in computing platforms or microprocessors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments may be applied to computing systems embodied as servers, blades, desktop computer systems, system on chip (SoC) device, handheld devices, tablets, set top boxes, in-vehicle computing systems, computer vision system, gaming systems, machine learning systems, and embedded applications. As will become readily apparent in the description below, the embodiments of methods, apparatus', and systems described herein (whether in reference to hardware, firmware, software, or a combination thereof) are beneficial to the development of high-performance computer interconnects and their respective systems.

As computing systems are advancing, the components therein are becoming more complex. As a result, the interconnect architecture to couple and communicate between the components is also increasing in complexity to ensure bandwidth requirements are met for optimal component operation. Furthermore, different market segments demand different aspects of interconnect architectures to suit the market's needs. For example, servers require higher performance, while the mobile ecosystem is sometimes able to sacrifice overall performance for power savings. Yet, it is a singular purpose of most fabrics to provide highest possible performance with maximum power saving. Below, a number of interconnects are discussed, which would potentially benefit from aspects of the solutions described herein.

One example interconnect fabric architecture includes the Peripheral Component Interconnect (PCI) Express (PCIe) architecture. A primary goal of PCIe is to enable components and devices from different vendors to inter-operate in an open architecture, spanning multiple market segments; Clients (Desktops and Mobile), Servers (Standard and Enterprise), and Embedded and Communication devices. PCI Express is a high performance, general purpose I/O interconnect defined for a wide variety of future computing and communication platforms. Some PCI attributes, such as its usage model, load-store architecture, and software interfaces, have been maintained through its revisions, whereas previous parallel bus implementations have been replaced by a highly scalable, fully serial interface. The more recent versions of PCI Express take advantage of advances in point-to-point interconnects, Switch-based technology, and packetized protocol to deliver new levels of performance and features. Power Management, Quality Of Service (QoS), Hot-Plug/Hot- Swap support, Data Integrity, and Error Handling are among some of the advanced features supported by PCI Express.

Traditional streaming interfaces to couple fabric to protocol agents have generally included proprietary interfaces (e.g., Intel^{™} On-chip System Fabric (IOSF^{™})), interfaces developed for coherent or unordered protocol, and other interfaces that are poorly adapted to scaling to handle the evolving data rates in modern protocols and architectures. For instance, proprietary interfaces may carry custom or use-case specific information or features that prevent standardization of the interface or that fail to scale to next generation bandwidths. While other traditional interfaces may be defined in a more generic manner, for instance, as a data bus for carrying packets. However, traditional bus definitions and interfaces may lead to receiver decode complexity, particularly in the presence of multiple flow control classes or virtual channels, especially as data rates increase and more packets are able to be processed per clock cycle. As an example, if four (or even more) packets of any channel or flow control can potentially arrive at a given clock cycle, and these were accessing shared buffers, then a corresponding four (or more) logical write ports may need to be provisioned in the receiver, resulting in excess surface area dedicated to providing such logic (and buffers). In some instances, traditional interfaces address use cases where multiple packets per cycle (of different flow control classes) simply by stamping multiple copies of the interface (e.g., one for each flow control class), leading to high pin counts. Additionally, traditional streaming interfaces have header and data packets following each other on the same physical wires, limiting the potential for latency optimizations. Some traditional interfaces fail to provide effective, flexible mechanisms for crediting flows, among other example shortcomings.

In some implementations, an improved, scalable streaming interface may be defined between agent logic on a device and a fabric, such as between the protocol layer and other devices coupled to a fabric (e.g., a CPU, endpoint device, switch, etc.). The streaming interface may support a load/store protocol, such as PCIe, Compute Express Link (CXL) (e.g., CXL.io), among other load/store protocols. The improved streaming interface may define interface rules and channels of the interface to enable significant chip area and latency advantages during implementation, while providing the power-efficient bandwidth scaling advantages that will become ever more critical, particularly as protocols approach higher speeds, such as the move to 32.0 GT/s in PCIe Gen 5, or to 64.0 GT/s Data Rates and beyond starting with PCIe Gen 6 and CXL 3.0, among other examples. Such an interface may optimize the best balance of pin count versus receiver decoding complexity. In some implementations, the improved streaming interface discussed herein may allow a modest number of logical write ports on receiver buffers, where the receiver buffers are shared amongst multiple virtual channels and flow control classes. Further, an improved streaming interface may bifurcate the header and data of packets into independent physical channels (e.g., a header channel and a data channel) to thereby allow the receiver to start processing the headers while data is still streaming in and thereby helps reduce overall latency and buffer sizing and complexity. Further, the improved streaming interface discussed herein may be standardized to enable ecosystems of IP blocks to adopt and develop to a scalable, standardized interface, rather than traditional proprietary interfaces, and allow more options of interoperability, among other example features and advantages, such as discussed herein.

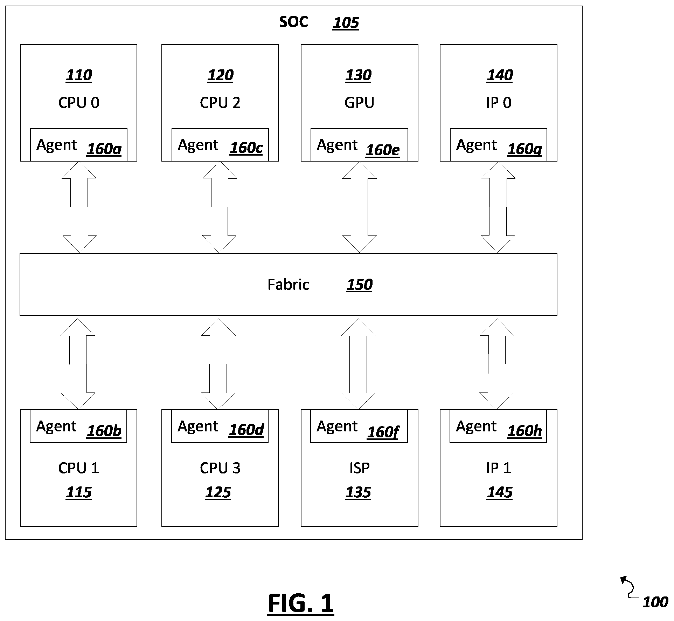

Turning to the simplified block diagram 100 of FIG. 1, a simplified example of a system on chip (SoC) device 105 is illustrated. A SoC map be implemented as an integrated circuit that incorporates multiple components of a computer, or computing blocks (or intellectual property (IP) blocks). Such blocks (e.g., 110, 115, 120, 125, 130, 135, 140, 145) may include components such as one or more CPU components 110, 115, 120, 125 (e.g., a microprocessor or microcontroller), special purpose processors 130, 135 (e.g., graphics processing units (GPUs), image signal processors (ISPs), tensor processor units, accelerator devices, etc.), memory components, input/output (I/O) ports, secondary storage blocks, and other compute blocks on a single die or substrate, such as a silicon die.

Compute blocks (e.g., 110, 115, 120, 125, 130, 135, 140, 145) of an example SoC 105 may be interconnected by an SoC fabric (e.g., 150). The fabric 150 may be implemented itself using a set of one or more IP blocks facilitating communication between compute blocks (e.g., 110, 115, 120, 125, 130, 135, 140, 145). In some implementations, the fabric 150 may be implemented as a network on chip (NOC), such as a NOC implemented one or more circuitry blocks.

Communication by the various blocks (e.g., 110, 115, 120, 125, 130, 135, 140, 145) may be facilitated through protocol agents (e.g., 160a-h) provided on the blocks (e.g., 110, 115, 120, 125, 130, 135, 140, 145). Each agent (e.g., 160a-h) may include logic (e.g., implemented in hardware circuitry, firmware, and/or software) to implement all or a subset of layers of one or more interconnect protocols (e.g., PCIe, Compute Express Link (CXL), Gen-Z, OpenCAPI, In-Die Interface, Cache Coherent Interconnect for Accelerators (CCIX), UltraPath Interconnect (UPI), etc.) through which the corresponding compute block is to communicate with other compute blocks in the system. As discussed herein, the agents may couple to the fabric 150 via a respective interface. While such agents may have traditionally coupled to fabrics via proprietary wire interfaces, one or more agents (e.g., 160a-h) may utilize respective instances of a configurable flexible on-die wire interface, which may be deployed to support the multiple different protocols of multiple different agents of the SoC 105. In other instances, interfaces between agents (e.g. 160a-h) may be to support non-coherent and/or load/store streaming protocols, and corresponding streaming fabric interfaces may be defined and implemented on the blocks (e.g., 110, 115, 120, 125, 130, 135, 140, 145) and the fabric 150, among other example implementations.

As introduced above, an improved streaming fabric interface architecture (SFI) may be provided in components of a system (e.g., IP blocks and components implementing the fabric of the system) to map Load/Store protocols (e.g., PCIe, CXL.io) between an agent and a fabric. An SFI interface may provide a scalable streaming interface that can sustain the high bandwidth requirements of Load/Store protocols, including emerging next generation speeds for such protocols. An SFI interface may enable ease of implementation on both the transmit and receive side when transmitting such high data rates. Additionally, the logic implementing the SFI interface may embody, realize, and enforce rules for communications on the interface (e.g., beyond those defined in the protocols supported by the interface) to greatly simplify storage overhead in the context of read/write ports on the receiver, among other example advantages.

An SFI interface may be employed both in the context of a host CPU (e.g., through the root complex) or in the context of a device endpoint. In both cases, SFI serves to carry protocol layer (transaction layer) specific information between different processing entities. As an example, on the device side, SFI can be used to interface between the PCIe controller and the application layer (e.g., the fabric or a gasket layer between the controller and the fabric). Similarly, on the host side, SFI can be used to interface between the PCIe Root Port and the CPU fabric. Configurable parameters may be defined in an SFI interface to allow instances of the interface to be parametrized to be wide enough and carry multiple packets in a single transfer according to the supported protocols and the system use case(s). On a given SFI interface, data transfer may be unidirectional. Accordingly, in some implementations, a pair of SFI interface instances may be provided (one in each direction) to facilitate implementations utilizing bidirectional data transfer between communicating blocks. Accordingly, many of the examples herein discuss a transmitter (TX) and receiver (RX) pair for a single instance of an SFI interface.

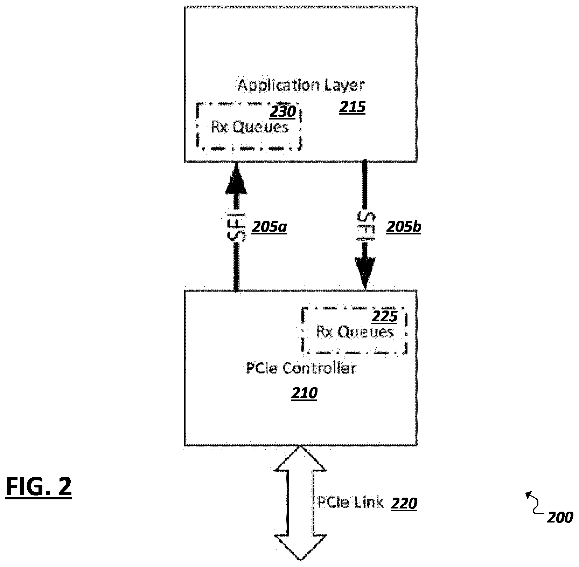

Different configurations can be enabled using SFI as the intermediate interface. For instance, an SFI interface may make no assumptions around protocol- or application-specific responsibilities of the transmitter and receiver of the interface. Rather, an SFI interface may simply provide a mechanism and rules for high bandwidth packet transfer. For instance, FIG. 2 is a simplified block diagram 200 illustrating an example implementation coupling a controller 210 (e.g., of an agent) to an application layer 215 (e.g. implemented through a fabric) via two SFI interface instances 205a, 205b. The controller 210 may include protocol circuitry or other logic to establish a link 220 according to a particular interconnect protocol (e.g., PCIe) and participate in initialization, training, and communications over the link 220. The example of FIG. 2 may represent an example use case of SFI in a PCIe application. SFI instance 205a may treat the PCIe controller 210 as the transmitter and the application layer element 215 as the receiver. Accordingly, application layer element 215 may include a receiver buffer for the SFI interface 205a for use in maintaining flow control credits (including shared credits for the channels of the SFI interface 205a). Similarly, SFI interface 205b may regard the application layer element 215 as the transmitter and the PCIe controller 210 as the receiver (and the controller 210 may include corresponding receiver queues or buffers 225 for use with the interface 205b).

While some implementations of SFI may utilize semantics and header formats of a PCIe-based protocol, SFI is not limited to supported PCIe-based protocol. Further, SFI does not contain a new protocol definition. SFI semantics can be used to support a variety of different protocols, provided the protocol can be mapped to or adapted to the flow control (FC) and virtual channel (VC) semantics that SFI provides, among other example features. For instance, SFI supports advertisement of 0 or more shared credit pools for the receiver queues (such as discussed in more detail below).

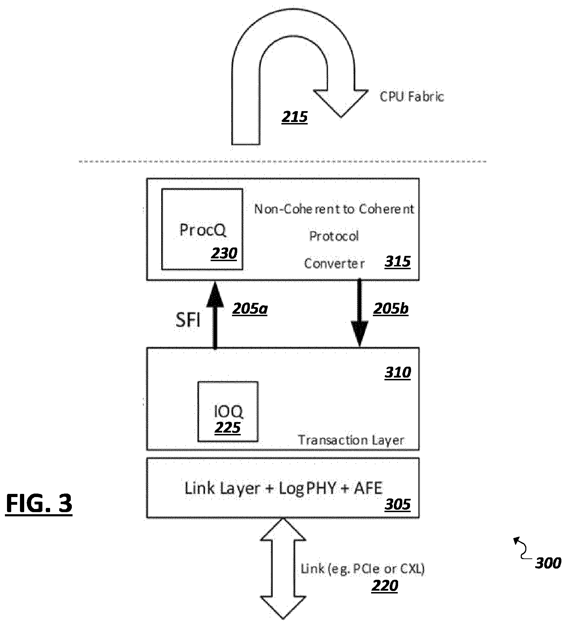

Turning to FIG. 3, a simplified block diagram 300 is shown illustrating a traditional root complex stack utilizing an SFI interface. For instance, SFI interfaces 205a, 205b may be used to couple protocol stack logic (e.g., 305, 310) to a non-coherent to coherent protocol converter 315 (e.g., which may sit between the protocol stack logic and the interconnect fabric 215 of the system. For instance, protocol stack logic may be embodied as an agent or controller for a particular non-coherent, load/store interconnect protocol (e.g., PCIe, CXL.io, etc.) and may include lower level layer logic 305 (e.g., implement in circuitry) including physical layer logic and link layer logic. Transaction layer logic 310 may also be provided and may be the layer that interface with the converter 315 over the SFI interface (e.g., 205a, 205b). Buffers 225 (e.g., I/O/ queue (IOQ) buffers may be provided and used to hide the physical link latency between device and host. The depth of such buffers 225 is typically shallow and the number of logical write ports needed are the number of concurrent packets available from the link in 1 clock cycle. For instance, in one example, for PCIe Gen5 speeds (32 GT/s), up to 4 packets can arrive in one 1 GHz cycle, so 4 logical ports would be needed in such an example in order to process these packets concurrently, given that the packets could potentially be of different flow control classes and/or virtual channels. Fabric-side buffers 230 (e.g., ProcQ buffers), on the other hand, may be implemented as deep buffers that are used to hide the CPU fabric latencies (e.g., for inbound writes, that translates to the latency of fetching ownership requests and committing data to coherency domain). These may include one or multiple write ports. In implementations with split queues, SFI semantics may allow further optimizations (e.g., on the ProcQ side to perform "batch processing" of transactions). Indeed, SFI semantics are oriented to improve buffer implementations in a variety of system configurations, providing a balance of receiver complexity with bandwidth scaling capabilities, among other example advantages.

Among the example features adopted in an example, improved SFI interface, receiver decoding may be simplified, with the interface scaling to support a wide range of data payloads (e.g., from as small as 4B to as large as 4KB (or larger)). An improved streaming interface may allow multiple packets to be delivered in the same cycle, allowing a scalable interface across a variety of payload sizes while maintaining a common set of semantics and ordering (e.g., PCIe-based, etc.). Configurable parameters may include the number of logical write ports at the receiver (e.g., 1 or 2), which may be supported by defining rules for the interface restricting the number of different packets or headers transmitted in a clock cycle to using a corresponding number of flow control classes and/or virtual channels. Reducing the number of logical write ports at the receiver may save significant area and complexity. Additionally, as noted above, an improved streaming interface may enable header processing (e.g., of header received over a dedicated header channel) at the receiver to begin while data is streaming in to improve latency (e.g., in the case of CPU Host, to help overlap ownership request latency with an incoming data stream.

Compute Express Link, or CXL, is a low-latency, high-bandwidth discrete or on-package link that supports dynamic protocol multiplexing (or muxing) of a coherency protocol (CXL.cache), memory access protocol (CXI,.mem), and I/O protocol (CXI,.io). CXL.cache is an agent coherency protocol that supports device caching of host memory, CXL.mem is a memory access protocol that supports device-attached memory, and CXL.io is a PCIe-based non-coherent I/O protocol with enhancements for accelerator support. CXL is intended to thereby provide a rich set of protocols to support a vast spectrum of devices, such as accelerator devices. Depending on the particular accelerator usage model, all of the CXL protocols (CXL.io, CXL.mem, CXL.cache) or only a subset may be enabled to provide a low-latency, high-bandwidth path for a corresponding computing block or device (e.g., an accelerator) to access the system.

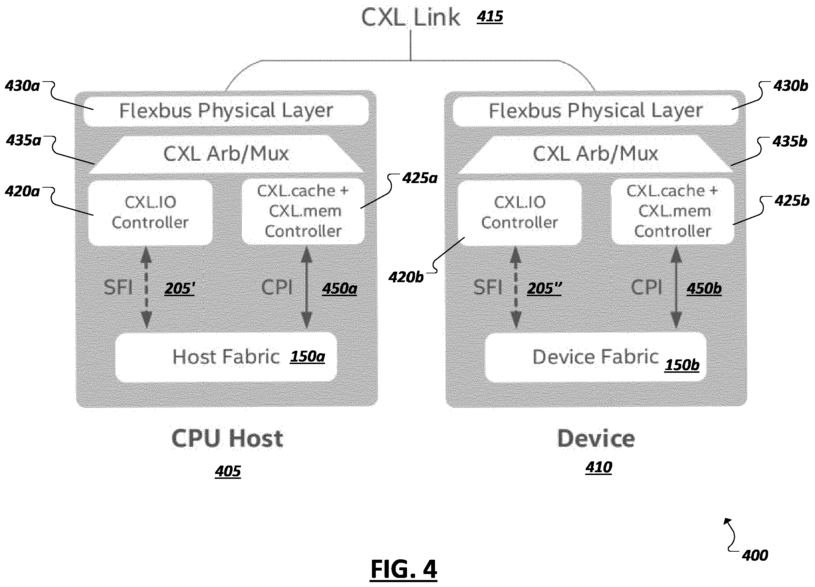

As noted above, in some implementations, agents utilized to implement a CXL.io protocol may couple to system fabric utilizing an SFI interface, such as described herein. For instance, turning to FIG. 4, a simplified block diagram 400 is shown illustrating example CXL agents and the coupling of such agents to a fabric. FIG. 4 shows an example system topology for ports supporting a CXL link 415. For instance, a CXL link 415 may couple a CPU host device 405 to another device 410 (e.g., a memory device or accelerator device). Each agent (on devices 405, 410) may include link layer logic (e.g., 420a-b, 425a-b) to support each of the sub-protocols of CXL (e.g., CXL.io, CXL.mem, CXL.cache). In the case of CXL.mem and CXL.cache, a common controller (e.g., 425a-b) may be utilized. For CXL.io, a controller 420a-b) may be provided that is separate from the coherent CXL.mem and CXL.cache protocols. Protocol multiplexing may be facilitated through CXL arbitration/multiplexing logic (e.g., 425a-b, implemented, in hardware circuitry), which interfaces with a Flex Bus^{™} physical layer (e.g., 430a-b). Flex Bus may be implemented as a flexible high-speed port that is statically configured to support either PCIe or CXL. Flex Bus allows for either a PCIe protocol or CXL protocol to be sent over a high-bandwidth, off-package link. The protocol selection in the Flex Bus PHY 430a-bmay take place during boot time via auto negotiation, based on the application.

Continuing with the example of FIG. 4, a first interface type 450a, 450b is used for coherent protocols such as CXL.cache and CXL.mem, whereas another different wire interface definition (e.g., 205', 205") (e.g., an SFI interface) is used for load/store protocols like PCIe and CXL.io. In one example, SFI 205', 205" serves as an intermediate interface, which makes no assumptions around protocol- or application-specific responsibilities between the transmitter and receiver and provides a scalable streaming interface that can sustain high bandwidth requirements of load/store protocols (e.g., PCIe, CXL.io, etc.). SFI does not contain a standalone protocol definition, the SFI semantics provided to support different protocols capable of being mapped to the flow control and virtual channel semantics provided by the SFI definition, among other examples and interface implementations.

As shown in FIG. 4, a system may employ example interface 450a, 450b to allow wires to be shared at the fabric and achieve wire efficiency at the fabric and agent perimeters by allowing different coherent protocols to share common wires. For instance, the channels of various protocols originating from agents may be carefully mapped to a minimal set of physical channels and virtual channels, so that the bandwidth and channel isolation requirements of the agents and protocols are satisfied with the lowest total wire count. The interface 450a, 450b may these multiple protocols to a common set of channels and use common flow control and virtualization features on these channels, among other example implementations.

In some implementations, an improved streaming interface may be implemented that is adapted to support a load/store protocol based at least in part on PCIe or PCIe semantics (e.g., PCIe or CXL.io). For instance, a supported protocol may utilize packet formats based on PCIe-defined formats. Additionally, Flow Control/Virtual Channel notions may be extended from PCIe definitions. It should be appreciated that other, additional protocols (e.g., non-PCIe or CXL protocols) may also be supported by such SFI interfaces. Indeed, while many of the examples discussed herein reference PCIe- or CXL.io-based protocols and implementations, it should be appreciated that the principles, features, and solutions discussed herein may be more generally applied, for instance, to a variety of other streaming or load/store protocols, among other example systems.

In some implementations, an SFI interface may have separate Header (HDR) and Data buses or channels, each of which can carry multiple packets' headers or payloads concurrently. Further, formalized rules may be set and adopted in logic of the agent to govern how packets are packed/unpacked on the header and data interfaces. For instance, an additional metadata channel, or bus, may be provided on the improved interface to carry metadata to enable the receiver to identify how to unpack the headers/data sent on the separate header and payload data channels respectively. Through separate, parallel header and data channels a system (e.g., the root complex of a CPU host) may enjoy latency benefits, for instance, by receiving potentially multiple headers before the corresponding payload is received. This resulting lead time may be used by the system to process the headers and start fetching ownership for the cache lines for multiple header requests, while the data of those requests is still streaming in. This helps overlap latencies and helps reduce buffer residency, among other example advantages.

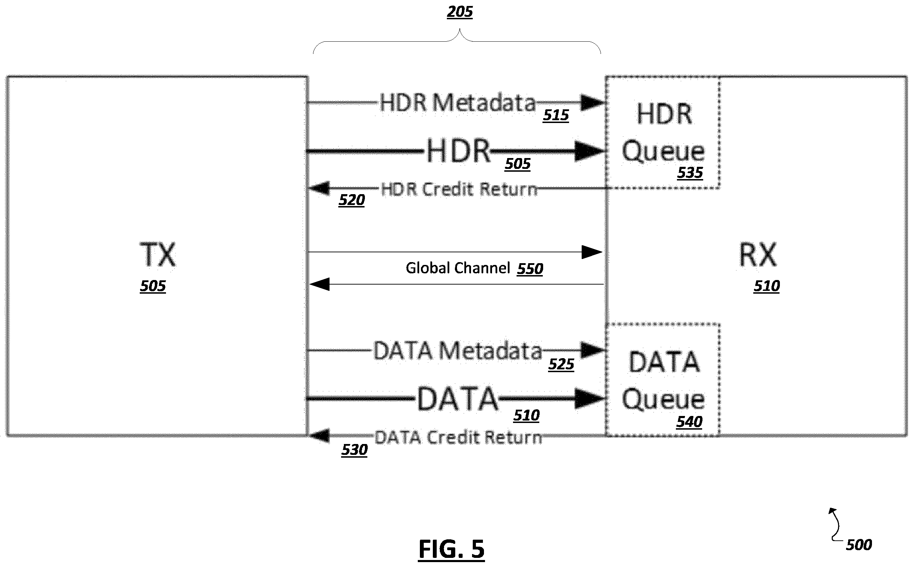

Turning to FIG. 5, a simplified block diagram 500 is shown illustrating an example implementation of an SFI interface. For instance, in each instance of an SFI interface, a set of physical lanes (e.g., wires or other conductors) may be provided and assigned to various channels, which embody logical sets of signals defined for the interface and assigned to respective physical lanes of the interface. Each device may possess pins and corresponding SFI logic (implemented in hardware circuitry and/or software) to implement its end (the transmitter or receiver), or instance, of the interface and couple to the physical lanes embodying the connection between the transmitter and receiver on the interface. An SFI interface instance may additionally define two channels for the sending of packets or other data transfer messages from the transmitter to the receiver. Specifically, in some implementations, the SFI interface 205 may include a Header (HDR) channel that embodies a set of signals (e.g., 505, 515, 520) that are respectively a first set of multiple lanes of the interface for use in sending header data for the packet. The SFI interface additionally includes a Data (DATA) channel that embodies another set of signals (e.g., 510, 525, 530) that are mapped to an additional set of multiple lanes of the interface 205 and are for use in sending payload data for the message. Signals of the HDR channel may include a main HDR signal 505 to carry a header itself, as well as a header metadata signal 515, and a header credit return signal 520 (directed from the receiver to the transmitter). Similarly, the DATA channel may also include a main DATA signal 510 to carry the payload data, as well as a data metadata signal 525, and a data credit return signal 530 (also directed from the receiver to the transmitter), among other examples signals. In some implementations, an SFI interface 205 may additionally include a global channel or layer (e.g., 550) which includes bidirectional control signals that apply across all physical channels (e.g., HDR and DATA) of the interface. For instance, the global channel may carry a set of global control signals that may be used to perform initialization or shutdown of the interface, communicate controls or parameters for the interface, among other features.

Each of the HDR and DATA channels can carry multiple packets on the same cycle of transfer. Since most Load/Store protocols rely on ordering semantics, SFI assumes implicit ordering when multiple packets are sent on the same cycle. Packets may be ordered, for instance, from the least significant position to the most significant position. For example, if TLP 0 begins from byte 0 of the header signal 505 and TLP 1 begins from byte 16 of the header signal 505, then the receiver considers TLP 1 to be ordered behind TLP 0 when such ordering rules are applied. For transfers across different clock cycles, the ordering rules of the relevant protocol are followed (e.g., SFI carries over all PCIe ordering rules when used for PCIe). In cases of link subdivision (e.g., dividing the overall lanes of the link into two or more smaller-width links (e.g., associated with respective root ports), the different ports from the controller perspective map to different virtual channels on the SFI. For instance, in such cases, implementations can support multiple port configurations within the same physical block (e.g., implemented as an agent or controller). In these cases, the same physical channel of SFI can be used to transfer packets for different ports, with each port mapped to its own set of virtual channels (e.g. 1 or more virtual channels per port), among other example implementations.

A set of parameters may be defined for an instance of an SFI interface to configure aspects of the instance. For instance, metadata signals of the HDR and DATA channels may be based on one or more of the configurable parameters. For instance, parameters may identify how the metadata signals carry metadata to convey information about the position of different packets within a single transfer, among other example information. For instance, in SFI, packet headers that have data associated with it send the packet header on the HDR channel and send the associated data separately on the DATA channel. There may be no timing relationship guarantee between the DATA and HDR channel transfers. It is assumed that the receiver tracking the associated data length for each received header and only processing the relevant data size. The data size may be sent with the packet header information (e.g., a PCIe implementation, using a PCIe packet header format identifies the amount of data in the length field of the PCIe TLP header to indicate how many 4-byte chunks of data are associated with that header). Information in the metadata sent over the metadata signals may also be used by the receiver to determine which headers map to which data (e.g., through flow control and virtual channel ID combinations), parity information, information about the header format (e.g., the header size), among other example information.

A global layer or channel of signals (e.g., 550) may carry signals that apply across all physical channels of the interface 205, such as control signals, vendor-defined signals, and other signals enabling other example functionality. For instance, the global channel 550 may carry the signals that are also used for initialization and shutdown of the interface (such as in the examples discussed below). Table 1 describes an example implementation of signals of a global channel of an example SFI interface.

**Table 1: Signals of the Global Layer**

| **Signal Class** | **Signal Name** | **Width** | **Direction** | **Description** |
|---|---|---|---|---|
| Init | txcon_req | 1 bit | Tx → Rx | Connection request from transmitter (0 → 1 connection request, 1 → 0 disconnection request) |
| | rxcon ack | 1 bit | Rx → Tx | Connection acknowledge from receiver (0 → 1 connection acknowledge, 1 → 0 disconnection acknowledge) |
| | rxdiscon nack | 1 bit | Rx → Tx | Disconnection NACK from receiver |
| | rx_empty | 1 bit | Rx → Tx | Receiver queues are empty for all channels and all credits have been returned |
| Vendor Defined | tx vendor field | VT bits | Tx → Rx | Optional signal to send static/global vendor-defined information from TX to RX. |
| | rx vendor field | VR bits | Rx → Tx | Optional signal to send static/global vendor-defined information from RX to TX. |

The HDR channel carries the header of request messages from the transmitter to the receiver. A variety of information may be encapsulated in the (protocol-specific) fields of a header transmitted using the HDR channel, including address and other protocol-level command information. Table 2 describes an example implementation of signals of an HDR channel of an example SFI interface.

**Table 2: Fields of the HDR Layer**

| **Signal Class** | **Signal Name** | **Width** | **Description** |
|---|---|---|---|
| VALID | hdr_valid | M bits | Indicates the start of a new packet on the corresponding header byte. Has a fixed association between the individual bits of hdr_valid and the bytes of header. |
| HDR | header | H bytes | Header information. It can contain multiple packets transferred in the same cycle. FC and VC information is embedded in the header information |
| HDR_METADATA | hdr_info_bytes | 2*M bytes | Indicates header size, flow control, virtual channel, and parity information. |
| CREDIT | hdr_crd_rtn_valid | 1 bit | Credit return valid |
| | hdr_crd_rtn_fc_id | 4 bits | Identifies the flow control class for this credit return |
| | hdr_crd_rtn_vc_id | 4 bits | Identifies the virtual channel for this credit return |
| | hdr_crd_rtn_value | N bits | Indicates how many credits are returned in this cycle |

The header size may be a predetermined parameter based on the peak sustained bandwidth expected or required of the system. An SFI interface (and corresponding logic) may enforce rules for the HDR channel such as having a packet header begin and end on the same cycle of transfer. Multiple packet headers may nonetheless be sent on the same cycle by sending one of the packet headers on a first subset of the header signal lanes and the other packet header on another subset of the header signal lanes. The interface may define, however, that the first packet on a valid header transfer starts on the lanes of the header signal corresponding to byte 0 of the header field (logically represented by the header signal lanes).

The header valid signals (hdr_valid) may be asserted to indicate corresponding valid values on the lanes of the header signal. In some implementations, the number of lanes of the header signal may be logically divided into byte-wise subsets (e.g., 16 bytes or 32 bytes of lane width in each subset) corresponding to the size of one of the protocol headers to be carried on the header signal. Further, each header valid lane may be mapped to one of the subsets to indicate that valid header data is being sent on a corresponding one of the subsets of lanes of the header signal. Additionally, the header metadata signal (hdr_info_bytes) may carry metadata (e.g., aligned with one of the headers carried on the header signal) to describe key attributes that can be used by the receiver to decode the corresponding header.

A DATA physical channel of an SFI interface may be used to carry payload data for all requests that have data associated with it. In SFI, there may be no explicit timing relationship or requirement between the HDR channel and associated data carried on the DATA channel. However, transmitters may be equipped with logic to check both HDR channel and DATA channel credits before scheduling either header data on the HDR channel or payload data on the DATA channel. Table 3 describes an example implementation of signals of a DATA channel of an example SFI interface.

**Table 3: Fields of the DATA Channel**

| **Signal Class** | **Signal Name** | **Width** | **Description** |
|---|---|---|---|
| VALID | data_valid | 1 bit | Indicates the start of a new packet on the corresponding header byte. Has a fixed association between the individual bits of hdr_valid and the bytes of header. |
| DATA | data | D bytes | Header information. Contains multiple packets transferred in the same cycle. FC and VC information is embedded in the header information |
| DATA_METADATA | data_start | DS bits | Indicates the start of a new data packet on the corresponding data byte. Have a fixed association between the individual bits of data_start and the bytes of data. The parameter DS is determined by the maximum number of separate packets that need to be sustained per cycle. |
| | data_info_byte | DS*8 bits | For every data_start bit, there is a data_info_byte, which indicates the FC ID and the VC ID of the associated data packet. |
| | data_end | DE bits | Indicates the end of a new data packet on the corresponding data 4 byte chunk. Has a fixed association between the individual bits of data_end and the bytes of data. The parameter DE is determined by the total data width D divided by the size of a defined chunk of data (e.g., a 4 byte chunk), since any of the quantized chunks of data can be the last data chunk. |
| | data_poison | DE bits | Indicates one or more bytes of the associated data packet is poisoned. Rx treats the entire payload as poisoned. |
| | data_ecrc | DE bits | If error correction code is supported, it is asserted when the corresponding bit of data_end is asserted, and indicates that the last chunk of data carries the error correction code (e.g., end-to-end cyclic redundancy check (ECRC) code). |
| CREDIT | data_crd_rtn_valid | 1 bit | Credit return valid |
| | data_crd_rtn_fc_id | 4 bits | Identifies the flow control class for this credit return |
| | data_crd_rtn_vc_id | 4 bits | Identifies the virtual channel for this credit return |
| | data_crd_rtn_value | N bits | Indicates how many credits are returned in this cycle |

In implementations of an SFI interface, payload data may be sent on the data signal of the DATA channel according to a multi-byte granularity (e.g., 4-byte granularity). Accordingly, the data for any payload may be identified as ending at a particular "chunk" of data (e.g., a particular 4-byte chunk). As an example, if the width of the data signal D is 64 bytes, the number of potential data end positions is DE = 64/4 = 16, with data_end[0] corresponding to data bytes[3:0], data_end[1] corresponding to data bytes[7:4], data _end[DE-1] for data bytes[D-1:D-4], and so on. The start of data signal (data start) may utilize the same or a different granularity than the end of data signal. An instance of an SFI interface may be parameterized to support (and limit the number of payload starts according to) a maximum number of starts DS in a clock cycle. As an example, if the width of the data signal bus D is 64 bytes and the instance of the SFI interface is configured to limit the number of starts in a cycle to 2, DS = 2, effectively dividing the data bus into two 32 byte chunks in which a new payload may begin being sent. For instance, in an example where D = 62 and DS = 2, data_start[0] would correspond to a chunk of data starting at data byte[0] and data_start[1] corresponding to a chunk of data starting at data byte[32], among other examples (including examples with lower or higher granularity in the start of data and end of data chunks (e.g., DS>2), smaller or larger data bus sizes, etc.).

ln one example implementation of a DATA channel of an SFI interface, the width of the data start signal may be equal to DS and the signal may effectively act as a mask to identify each corresponding chunk of data on the data signal (e.g., aligned in the same clock cycle) that corresponds to the start of a respective payload. Further, each data start bit may have an associated data_info_byte signal sent with it that indicates metadata for the corresponding payload. In some implementations, the data_info_byte is sent only once for a given payload {e.g., with the corresponding data start chunk and data_start_bit), while in other instances the metadata may be sent (e.g., repeated} to correspond with every chunk of data in the same payload, among other example implementations. In one implementation, the data_info_byte signal may indicate the respective FC ID and the VC ID of the corresponding packet (e.g., with 4 bits (e.g., data_info_byte[3:0]) carrying the FC ID and another 4 bits (e.g., data_info_byte[7:4]) carrying the VC ID), among other example information for use by the receiver in processing the data payloads sent over the data signal bus.

Unlike the HDR channel, in some implementations of a DATA channel, data chunks from the same packet can be transferred over multiple cycles. For example, the raw data bus width could be implemented as 64B per cycle, allowing a 128B data packet to be transferred over 2 clock cycles. In some implementations, once a payload has begun transmission, the transmitter may guarantee that all the relevant data chunks in the payload are transferred consecutively from LSB to MSB and across successive clocks (e.g., without any gaps or bubbles). In some implementations, only one packet of a particular FC ID/VC ID combination may be sent on the interface at a time (with the FC ID/VC ID combination only reused after the preceding packet using the combination finishes sending). In some implementations, packets with different FC ID/VC ID combinations may be interleaved on an SFI interface (e.g., with a packet of one FC ID/VC ID combination being interrupted to send at least a portion of a packet with another FC ID/VC ID combination), among other examples.

The granularity of credits on the data channel may also be configurable (e.g., at design compile time) and may correspond to a multiple of N-bytes. For instance, in one example, the granularity may be required to be a multiple of 4 bytes. If the credit granularity is chosen to be 16 bytes, then even a 4-byte data packet transferred uses one 16-byte worth of credit, among other example implementations.

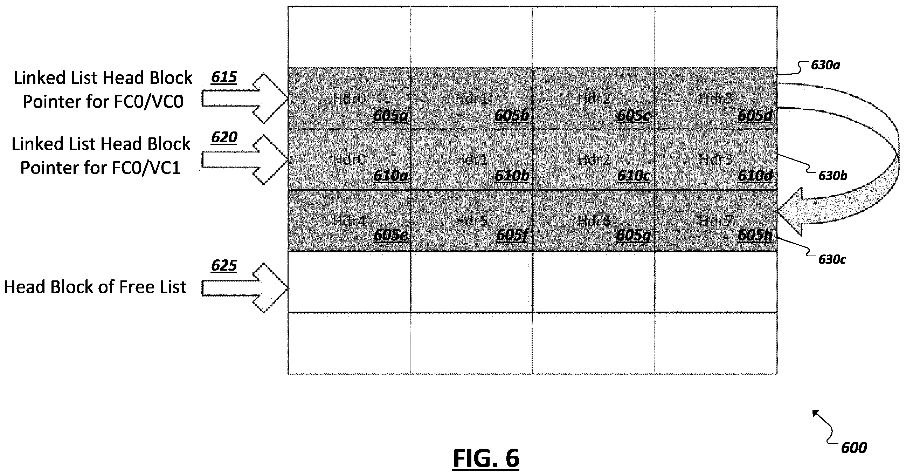

FIG. 6 is a simplified block diagram 600 illustrating an example implementation of a receiver buffer for use with an example SFI interface. In one example, the receiver buffer may be implemented as a linked list with a single write port and shared between two virtual channels (e.g., VC0 and VC1) of 1 flow control class (FC0). In this example, four headers per cycle can be received on the corresponding SFI interface. The linked list is managed in blocks (e.g., 630a-c) of four header locations at a time. While the linked list may appear to be logically in contiguous memory, physical blocks may be implemented non-contiguously or even in separate storage elements. In one example, all locations within a given block (e.g., 630a) are to be filled up before moving to the next block (e.g., 630b). The buffer is allocated by the receiver one block at a time, hence corresponding shared credits may also be at a block granularity. In implementations, where a set of 4 headers (e.g., 605a-d) in a block (e.g., 630a) is actually made of separate storage structures, each of these storage columns may be successfully implemented with only a single write port. For instance, each of the columns represented in the linked list buffer of FIG. 6 may be physically implemented as a distinct buffer/storage element with a respective single write port. Moreover, timing relief and pipelining potentials may be unlocked by using "block" management of linked list pointers (e.g., 615, 620, 625), since the next block pointer is only needed to be looked up once in 4 headers (in the example of FIG. 6). In some streaming protocols, the receiver cannot make the assumption of only one FC/VC combination per cycle in the general case, and therefore may be designed and equipped with multiple write ports (e.g., as the tails of different FC/VC can collide within the same storage column).

As discussed above, An SFI interface (and corresponding logic and buffers/trackers utilized by the transmitter and/or receiver to implement its half of the interface) may enable pipelining of header processing while data is streaming. Indeed, latency savings realized therethrough, in terms of header processing, directly translate to saved buffers in the receiver. In the context of Load/Store protocols, it is assumed that a receiver will separate the header and data internally anyway, as the headers are heavily consumed by the control path, whereas data for the most part is isolated to the data path. By splitting the header and data channels on an example SFI interface, headers of later requests may even bypass data of earlier requests and this can allow the receiver to start processing headers while data transfer is being completed. In the context of Host CPU processing inbound (device to host) writes, this may translate to a head start in obtaining ownership of the relevant cache lines, among other example use cases and advantages. Indeed, since fetching ownership is one of the most significant drivers of latency when processing writes, overlapping this while data streams can help reduce overall latency and buffers in the CPU. Deadlock is avoided by making sure that the transmitter checks for both header and data credits before sending either header or data.

In some implementations, each VC and FC defined for an SFI interface is to use a credit for sending any message and collect credit returns from the receiver. The source may consume the full credits required for a message to complete. Transmitters check for both HDR channel and DATA channel credits before sending corresponding messages on the respective channel to the receiver. The granularity of HDR and DATA channel credits are predetermined between the TX and RX. For instance, the granularity of credits on the data channel may be configured (e.g., at design compile time) to only be a multiple of N-bytes. For instance, in one example, the granularity may be required to be a multiple of 4 bytes. If the credit granularity is chosen to be 16 bytes, then even a 4-byte data packet transferred uses one 16-byte worth of credit, among other example implementations. In one example, FC IDs may be based on PCIe semantics (e.g., 4'h0 = Posted, 4'h1 = Non-Posted, 4'h2 = Completions), among other example implementations. Further, each of the physical channels (e.g., DATA and HDR) may be outfitted with dedicated credit return wires (which, unlike the remaining channels flow from the receiver to the transmitter). For instance, during operation, the receiver returns credits whenever it has processed the message (or guaranteed a buffer position for the next transaction).

In some implementations, SFI allows two schemes for supporting sharing of buffers between different FC and VC IDs. In both the schemes, the receiver is to advertise the minimum number of dedicated resources needed for a forward progress guarantee. For large packet transfers, this means that the maximum payload size is based on the dedicated credit advertisement. If shared credits are used, the transmitter and receiver are to predetermine which of the credit types, or schemes, is to be used. This determination may be made at design time, in some implementations. In alternative implementations, the credit scheme may be dynamically determined (e.g., based on parameters written to corresponding configuration registers), among other examples.

A first one of the two schemes for credit sharing may be transmitter-managed. In this scheme, the transmitter is responsible for managing shared buffers in the receiver. One or more shared credit pools are advertised or consumed with spare VC ID/FC ID encodings. When the transmitter consumes the shared credit pool credit, it sends the packet using the corresponding VC ID/FC ID encoding. When the receiver deallocates a transaction that used the shared credit, it does a credit return on the corresponding VC/FC ID combination. In some implementations, a bit may be provided in the header (along with a corresponding signal on the HDR channel) to indicate whether the credit is a shared credit or not. Accordingly, the receiver may have to further decode the header packet to explicitly determine the real VC ID or FC ID of the packet, among other examples.

In one example implementation of transmitter-managed credit sharing, the mapping of example shared credit pools advertised by the receiver (e.g., in a PCIe-based implementation) may support two VCs on the link and adopt the following example mapping shown in Table 4:

**Table 4: Example encodings for shared credits**

| **Encoding** | **Description** |
|---|---|
| VC encoding 4'b0 | Maps to PCIe advertised VCO on the link |
| VC encoding 4'b1 | Maps to PCIe advertised VC1 on the link |
| FC encoding 4'b0 | Posted (P) |
| FC encoding 4'b1 | Non-Posted (NP) |
| FC encoding 4'b2 | Completions (C) |
| VC encoding 4'b2; FC encoding 4'b0 | Shared credit pool 1, all VCs, P or C classes can use these shared credits |
| VC encoding 4'b2; FC encoding 4'b1 | Shared credit pool 2, all VCs, NP can use these shared credits |

The another one of the two credit-sharing schemes may be receiver-managed. In a receiver-managed scheme, the receiver is responsible for managing shared buffers. Only the dedicated credits are advertised to the transmitter. Typically, the advertised dedicated credits cover the point-to-point credit loop across the SFI, and the shared credits are used to cover the larger credit loops (e.g., the CPU fabric or Application Layer latencies). After a particular FC/VC ID transaction is received, and shared credits are available, a credit can be returned for that FC/VC ID combination (e.g., without waiting for the transaction to deallocate from the receiver queue). This implicitly gives a shared buffer spot for that FC/VC ID. Internally, the receiver tracks the credits returned to transmitter on a FC/VC basis and further tracks the credits currently consumed by transmitter. With this tracking, the receiver can ensure the maximum number of buffers used per FC/VC. The receiver may guarantee the required dedicated resources for forward progress guarantee, among other example implementations.

Error handling for illegal flow control cases may result in undefined behavior. Accordingly, SFI interface logic on the agents and fabric may check for illegal cases to trigger assertions in RTL and also log/signal fatal errors to allow for post-silicon debug. For instance, SFI may maintain consistency between the HDR and DATA streams, meaning that the transmitter is to send the data payloads in the same order it is sending the corresponding headers and vice versa. In some implementations, receiver logic may include functionality to detect and flag fatal errors for violations, among other example error handling features. In some implementations, SFI provisions for data poisoning to be sent at the end of a data transfer. In case of occasional errors, the ownership request could be discarded/written back without modification, or the host can choose to poison the relevant cache lines and write the updated data, among other examples.

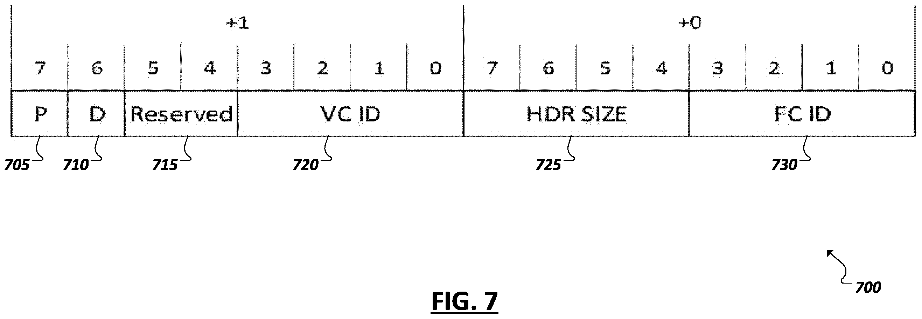

Turning to FIG. 7, a representation of an example metadata format 700 is shown that may be carried on the lanes of the header metadata signal. The least significant bytes and bits are shown to the right. P (705) is the Parity bit for a corresponding header. In some implementations, support for the parity bit may be optional (e.g., and the parity bit 705 treated as an additional reserved bit). When supported, parity may be supported, for instance, by XOR-ing at least all of the bits of a packet header. In some implementations, both the bits and the non-parity bits of the associated metadata 700 may be XOR-ed to determine the parity, among other examples. The bit D (710) indicates whether the header has corresponding payload data associated with it. All Reserved bits (e.g., 715) may be ignored the receiver or may be required to be driven to 0 by the transmitter. In some implementations, witches/fabric routers may be required to propagate the Reserved bits 715 as-is without any modifications. In some implementations, Reserved bits 715 may be utilized for vendor-defined encodings or future information, among other examples. The header size (HDR SIZE) 725 in the example metadata 700 may specify the size of the header (e.g., in 4-byte granularity). When computing the header size, the length of the header metadata (700) may be ignored (and not considered a part of the header).

In implementations of an SFI interface, a number of maximum packet headers that can be transmitted in 1 cycle on the interface may be predetermined (e.g., and recorded in a configurable parameter of the interface). The maximum packet headers per cycle may be determined by the width (or number of lanes) (H) of the header signal and the maximum packet header size. An SFI interface may be implemented (and designed) such that the header width (H) allow the common case usage to sustain maximum throughput. As an example, assuming the common case application header size is 16 bytes (e.g., mapping to 4 D-Word headers in PCIe), and that the interface is to sustain 2 headers per cycle, H = 2*(16) = 32 bytes. A corresponding valid signal (and lane) may be included in the HDR channel to correspond to the number of desired headers per cycle. As an example, if it is desired for the interface to sustain up to 2 headers per cycle, a corresponding M=2 number of valid lanes may be defined to support one valid signal for each of the potential 2 headers in a cycle (e.g., with hdr_valid[0] corresponding to a header starting in byte 0 of the header signal, and hdr_valid[1] corresponding to a header starting in byte 16 of the header signal. In some instances, one or more of the header formats of a supported protocol may be too large to be sent in only one of the subsets of lanes defined in the header signal (and assigned to a respective one of the valid signal lanes), meaning that such headers may utilize two or more of the subsets of lanes in the header signal for transmissions (and only a first (least significant bit) one of the two or more associated valid signals may be asserted). In such instances, when the maximum headers per cycle is set to 2, if a larger header format is to be sent on the header signal, only 1 header can be transferred in that cycle and hdr_valid[1] is not asserted, among other examples.

Continuing with the example of FIG. 7, header metadata may additionally include information for use in flow control for the header (and related packet). For instance, metadata may include a virtual channel (VC) identifier (ID) 720 for the header and a flow control class (FC) ID 730 for the header. In some instances, packet ordering may be according to the VC ID and FC ID (e.g., the combination of the VC ID and FC ID) of the packet. In some implementations, parameters of an SFI interface may be configured to set, for the interface, a predetermined number of maximum FC and VC ID combinations may that are allowed to be used in any given transfer cycle (e.g., clock cycle) of the interface. This maximum number of FC-VC combinations may be advertised or otherwise set at both the transmitter and receiver interface logic (e.g., at design compile time). This maximum value may be set, for instance, to assist in minimizing the write ports in the storage of receivers when the receiver buffers are shared between supported FCs and/or VCs. As an example, an interface may be parameterized to accept a maximum of two different FC-VC combinations in a cycle, such that on any given cycle all the packet headers transferred belong to at most two different FCs within the same VC, the same FC but for two different VCs, or the same FC-VC combination.

Transmitters may utilize credits associated with FCs, VCs, or FC-VC combinations to determine whether a packet may be sent over the channel. For instance, if a packet header has data associated with it, the packet header is sent on the HDR channel and the associated data is sent on the DATA channel. Prior to sending the header or payload data, the transmitter may check (e.g., a tracking record in local memory) for available credits for both headers and payload data (and the corresponding HDR and DATA channels) before scheduling the header or payload data transfer. In some implementations, the credit granularity for the Header channel may be set to the maximum supported header size. For example, if the maximum header size supported is 20 bytes, then 1 credit on the Header channel may correspond to 20 bytes worth of storage at the receiver. In some instances, even if only a 16-byte header is to be sent, 1 full credit is consumed corresponding to the full 20 bytes, among other examples and similar alternative flow control and crediting implementations.

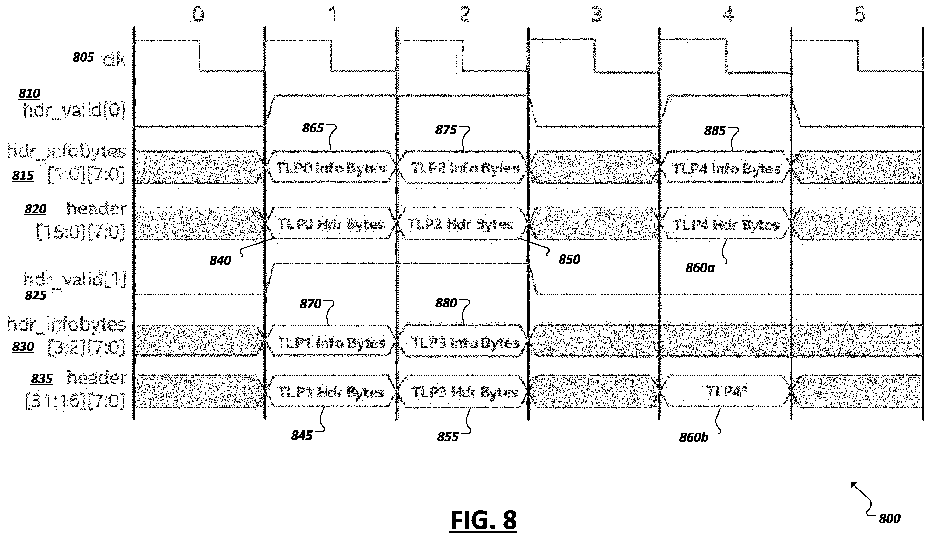

Turning to FIG. 8, a simplified timing diagram 800 is shown to illustrate an example of header transfers using a header channel of an example SFI interface. The header channel may include a clock lane, one or more lanes dedicated to header valid signals (e.g., 810, 825), lanes dedicated to communicating header metadata (e.g., 815, 830), and lanes dedicated to implementing multiple bytes of a header bus (e.g., 820, 835). In the example of FIG. 8, multiple valid signals are provided to govern the sending of valid header data on corresponding subsections of the header bus. For instance, header lane 810 may carry valid signals corresponding to the lanes (e.g., 820) implementing bytes 0-15 of the header bus and header lane 825 may carry valid signals corresponding to the lanes (e.g., 835) implementing bytes 16-31 of the header bus. Accordingly, valid signal 810 may be asserted as long as valid data is being sent on bytes 0-15 of the header bus (e.g., as in clock cycles 1, 2, and 4), and likewise, valid signal 825 may be asserted to correspond with valid data sent on bytes 16-31. In one example, as in FIG. 8, the corresponding header data may be sent in alignment (e.g., the same clock cycle) as the corresponding asserted valid signal, while in alternative implementations, a delay may be defined between the assertion of a valid signal and the sending of header data, among other example features and implementations.

Continuing with the example of FIG. 8, the subsections of lanes implementing the header bus may also be associated with respective header metadata (or hdr_info) signals (e.g., 815, 830). For instance, header bytes 0-15 (e.g., 820) may be associated with a first header metadata signal 815 and header bytes 16-31 may be associated with a second header metadata signal 830. The header metadata signal may carry data (e.g., 8 bytes) per cycle that describes attributes of the header carried on corresponding header bus lanes. In some cases, both subsections of the header bus may be utilized to carry a larger header, resulting in fewer than the maximum number of headers-per-cycle being transmitted in a given cycle (e.g., clock cycle 4). When two or more subsections of the header bus are used to transmit a single header, in some implementations, only one of the corresponding metadata signals (e.g., the signal corresponding to the least significant bytes of the header) may carry data, while the remaining metadata signals do not carry any metadata. In this manner, a receiver may identify that more than one subset of header bus lanes is being used to transmit a single header, among other examples (e.g., the assertion of one or both of the valid signals (e.g., 810, 825) corresponding to the subsections of the header bus used to communicate the header).

In the particular, simplified example of FIG. 8, the headers of five transaction layer packets (TLPs) are shown being transmitted over an example SFI header channel. For instance, header bus subsections 820, 835 may each carry headers of two distinct TLPs in clock cycles 1 and 2 (e.g., the headers of TLP0 (840) and TLP1 (845) is cycle 1, and the headers of TLP2 (850) and TLP3 (855) in cycle 2). This may be possible based on the header sizes of these respective packets. Further, corresponding header metadata (e.g., 865, 870, 875, 880) may be transmitted on the corresponding header metadata signals 815, 830 in cycles 1 and 2. The valid signals 810, 825 may be de-asserted in cycle 3, causing no additional header data to be transmitted during this cycle.

In cycle 4, the header of another TLP, TLP4, is to be transmitted. In this example, the size of the header of TLP4 requires transport over both of the header bus subsections 820, 835 in order to communicate the header over the HDR channel in a single clock cycle. For instance, the headers (e.g., 840, 845, 850, 855) of TLPs 0-3 may have been of size HDR_SIZE=4, while the size of the TLP4 header is HDR_SIZE=5. Accordingly, in this example, the bytes of the TLP4 header (860a-b) are transmitted on the lanes of both header bus subsections 820 and 835. In this example, only the valid signal 810 corresponding to the subsection (or bytes) of the header bus carrying the beginning of the header (or the least significant bytes) is asserted high (at 890), while the other valid signal 825 remains deasserted in clock cycle 4. Similarly, only one of the header metadata signals (e.g., 815) may be used to carry the metadata information for the TLP4 header, with the metadata signal (e.g., 830) corresponding to the most significant bytes of the header carrying a null or other signal. In one example, the headers of TLPs0-4 may be according to a PCIe-based protocol. In such instances, The TLP Hdr bytes follow the format described in the PCI Express Base Specification. In this example, hdr_start[0] is associated with header byte[0] and hdr start[1] is always associated with header byte[16], among other example implementations.

In some implementations, an SFI interface may be implemented as a synchronous interface, where both sides of the interface run on the same clock. This notwithstanding, transmitters and receivers may not be required to coordinate resets at each respective device. Instead, in some implementations, an initialization flow defined for the interface may define a separate handshake to ensure transmitter and receiver exchange information about interface reset and flow control before traffic begins on the interface.

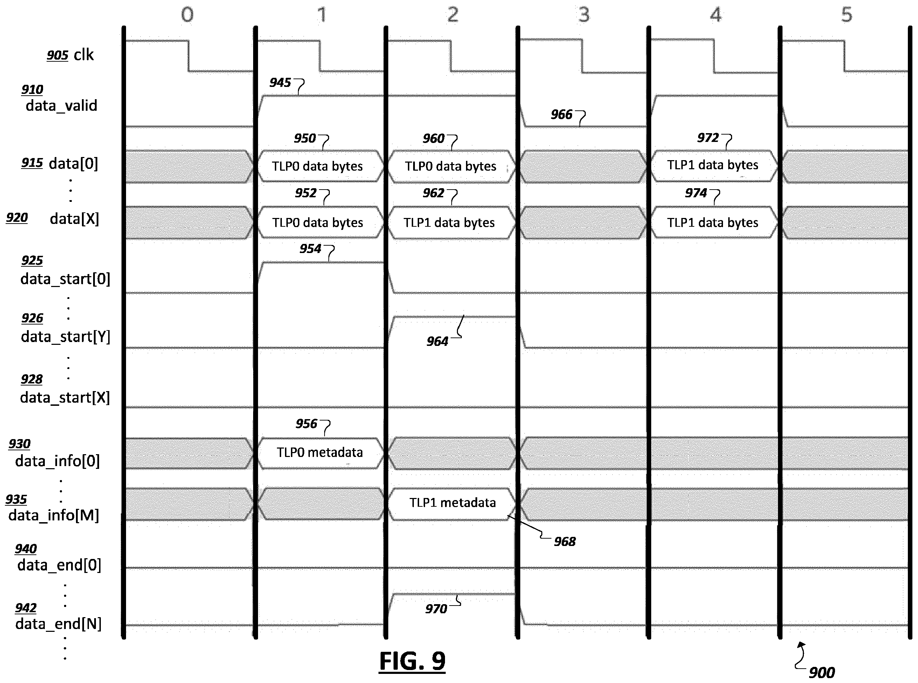

Turning to FIG. 9, a simplified timing diagram 900 is shown to illustrate an example of data transfers using a data channel of an example SFI interface. In this example, the DATA channel includes a clock 905, a single valid signal 910 (e.g., on a single lane of the channel) and sets of lanes (e.g., 915, 920) implementing one or multiple subsections of the data bus. In the particular illustrative example of FIG. 9, X-1 subsections are illustrated. When the valid signal 910 is asserted (e.g., at 945), data appearing on the data bus (and supporting signals (e.g., 925, 930, 935, 940) are considered valid. When valid 910 is deasserted (e.g., at 966), transmission of data on the data bus is to pause or stall until valid is reasserted.

In some implementations of an SFI DATA channel, a start of data (or data_start) signal may be provided, which is implemented on a set of lanes to implement a corresponding number of bits of the data_start signal. For instance, the data_start signal may be implemented as a bit vector with a corresponding data_start lane (e.g., 925, 926, 928, etc.) being mapped to a respective byte or span of bytes in the data bus. For instance, each data_start lane (e.g., 925, 926, 928, etc.) may map to a corresponding one of the X+1 subsections of the data bus. For instance, in an example where there are 8 subsections of the data bus, the start of data signal may be composed of 8 bits or lanes, with each bit mapped to one of the subsections. When a first byte (e.g., as measured from the least significant byte to the most significant byte) of a payload is communicated in a particular clock cycle, the corresponding start of data signal (e.g., 925) may asserted (e.g., at 954) identify the subsection (or chunk) of the data bus in which that first payload byte can be found. Through this, a receiver may identify a boundary between two payloads communicated on the channel.

As in the example of an HDR channel, an SFI DATA channel may also carry metadata on dedicated metadata (data_info) signal lanes (e.g., 930, 935) to describe corresponding payload data sent on the data bus. In some implementations, metadata for a payload may be communicated on the DATA channel in association with the start of that payload (e.g., aligned with the first byte of the payload and the corresponding data_start signal). Indeed, multiple metadata signals may be defined and carried on the DATA channel, one corresponding to each of a corresponding number of subsections of the data bus (e.g., 915, 920). The subsections or chunks, in some implementations, may correspond to the same logical chunks utilized in the data_start signal (and/or the data_end signal 940). For instance, when a particular chunk carries the first bytes of a new payload, a corresponding one of the metadata signals (e.g., 930, 935) is responsible for carrying the corresponding metadata for that payload. As an example, as shown in FIG. 9, in clock cycle 1, the start of the payload (950) of TLP0 may begin on a first subsection (e.g., 915) of the data bus. Accordingly, the data_start signal 925 may indicate (at 954) that the subsection (e.g., corresponding to Byte 0 of the data bus) carries the start of a new payload. Other subsections (e.g., 920) of the data bus may be used to communicate additional other chunks (e.g., 952) of the same payload. Additionally, one of the metadata signals (e.g., 930) corresponding to the first subsection (e.g., 915) of the data bus, may be encoded with the metadata (e.g., 956) for the TLP0 payload.

Continuing with the example of FIG. 9, payload data (e.g., 950 ,952, 960) of TLP0 may continue to be sent over multiple clock cycles on the data bus until it has all been sent. The end of data (or data_end) signal 940 may operate in a manner similar to the start of data signal with a number of lanes (e.g., 940, 942) mapped to identify a subsection of the data bus in which a final chunk of payload data has been sent within a corresponding clock cycle. The granularity of the subsections or chunks referenced by the data_end signal may be higher or lower than or the same as that used in the data_start and metadata signals. In one example, the subsections or chunks referenced by the data_end signal 940 may be 4 bytes, among other examples. In the particular illustrative example of FIG. 9, the final bytes/bits of the payload of TLP0 are to be sent in a subsection "N" of the data bus bytes and lanes, as measured according to the granularity configured for the data_end signal. Accordingly, the lane (e.g., 940) of the data_end signal mapped to subsection N may be asserted to identify that subsection N carries the end of the payload. In some implementations, the granularity of the data bus subsections and chunks used by the start of data, end of data, and metadata signals may be configured through corresponding parameters set for the SFI interface, among other examples.

Continuing with the example of FIG. 9, a second payload of a second packet (e.g., TLP1) may be sent on the data bus (e.g., the start of the second packet being sent in a data chunk/subsection "Y"). In some implementations, payloads of multiple packets may be sent concurrently on the data bus (e.g., using respective subsections of the data bus). In this example, the payload of TLP0 ends and payload of TLP1 begins in clock cycle 2. Accordingly, both a data end signal (e.g., 970) and a data start signal (e.g., 964) are sent in the same cycle, with the data start signal 964 indicating the subsection or chunk (e.g., subsection "Y", where 0<Y<X) of the data bus in which the start of the payload appears. In the example of FIG. 9, the start of data signal may be at a 1-byte granularity and specifically identify the byte in the data bus where the payload begins (e.g., Byte 0 for the payload of TLP0, Byte Y for the payload of TLP1, etc.). Accordingly, the width of the data start and data end signals may be based on the respective granularity used. Further, in the example of FIG. 9, the payload of TLP1 begins being sent in clock cycle 2, but the transmission may be temporarily interrupted through the de-assertion of valid signal 910 (at 966), with the remaining bytes (e.g., 972, 974) sent when the valid 910 is reasserted. In other examples, valid may be required to remain asserted until all bytes of an in-transit payload have been sent, among other example implementations. It should be appreciated that the examples of FIGS. 8 and 9 are simplified, non-limiting examples provided for the sake of illustrating more general principles (and alternative implementations) that may be implemented in example SFI HDR and DATA channels, among other examples.

In some implementations, a state machine or other logic may be provided on agent and fabric devices to participate in defined connect and disconnect flows for an SFI interface. For instance, such flows may be invoked during boot/reset and when going into a low power mode, among other example states or events. In some implementations, SFI defines an initialization phase where information about credit availability in the receiver (RX) is communicated to the transmitter (TX) after a connection is established. In some instances, reset can independently de-assert between the agent and fabric sides of SFI. For independent reset, the initialization signals may be driven (e.g., on the Global channel) to the disconnected condition when in reset and no traffic may be sent until initialization reaches the connected state. The disconnect flow may be additionally supported by agents, for instance, to reconfigure credits and achieve power saving. Without this flow, all SFI credits may be configured to a final value before the first connection can proceed.

In initializations, the transmitter and receiver sides (e.g., the agent and fabric sides) of an SFI interface may be brought out of reset close to or at the same time. One end of the interface (e.g., after coming out of reset) may not have implicit requirements for when the other end should come out of reset. In some implementations, SFI may define an explicit handshake during initialization between the agent and fabric to ensures that both endpoints (and all pipeline stages between them) are out of reset before any credits or transactions are sent on the UFI interface. Accordingly, after reset, the receiver may begin sending credits for use by the transmitter.

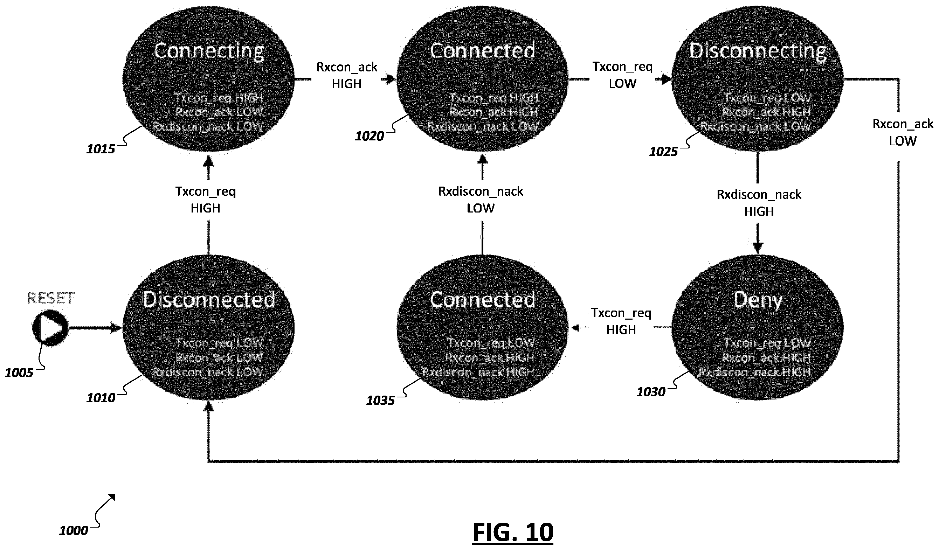

FIG. 10 is a diagram 1000 illustrating an example state machine for initialization states in an example implementation of an SFI interface. States may include a Disconnected state 1010 (which may be entered based on a reset 1005), a Connecting state 1015, a Connected state (1020, 1035), a Disconnecting state 1025, and a Deny state 1030. The combinations of values of the txcon_req signal, rxcon ack signal, and rxdiscon_nack signals may indicate a respective initialization state. As an example, in the Disconnecting state 1025, the txcon_req signal may be LOW, the rxcon ack signal may be HIGH, and the rxdiscon_nack may be LOW. Changing a particular one of the signal values may cause a transition from one initialization state to another. For instance, wherein the Disconnecting state 1025, changing the rxcon ack signal from HIGH to LOW may cause a transition to the Disconnected state 1010, while changing the rxdiscon_nack signal from LOW to HIGH may cause a transition to the Deny state 1030, among other example as illustrated in the state machine example of FIG. 10. In a UFI interface, respective initialization states are used to determine actions to be performed by the receiver and transmitter, such as the example actions described in Table 5 below.

**Table 5: Initialization State Actions**

| **txcon_req** | **rxcon ack** | **rxdiscon_nack** | **State** | **Tx Actions** | **Rx Actions** |
|---|---|---|---|---|---|
| 1 | 0 | 0 | Connection request (Connecting) | Sink Credits | |
| | | | | Do NOT Send Packets | |
| 1 | 1 | 0/1 | Connected | Sink Credits | Send Credits |
| | | | | Send Packets | Sink Packets |
| 0 | 1 | 0 | Disconnection | Sink Credits | |
| | | | request (Disconnecting) | Do NOT Send Packets | |
| 0 | 1 | 1 | Deny (Disconnect Rejected) and must go back to connected | | |
| 0 | 0 | 0 | Disconnected | Drop Credits | Do NOT Send Credits |
| | | | | Do NOT Send Packets | |
| | | | | | Do NOT Sink Packets |
| 1/0 | 0 | 1 | Illegal States | n/a | n/a |

Signaling rules may be defined for a Global initialization signal set. In one example, the txcon_req signal may be defined such that a transition from 0 to 1 reflects a connection request and a transition from 1 to 0 reflects a disconnection request. Credit return signals may be provided, for instance, with a credit valid (crd_valid) signal and a credit shared (crd_shared) signal. In one example, crd_valid = 1 may be defined to mean it is releasing the dedicated message credits for a protocol ID and a virtual channel ID, while crd_shared = 1 means it is releasing a shared credit (which can happen in parallel with a dedicated message credit return). In some implementations, a credit return behaves in the same way during the first initialization of credits as it does during runtime return of credits. The rx_empty signal indicates all channel credits returned from the receiver and all receiver queues are empty (although this may not account for messages that are in flight or in intermediate buffers such as clock crossing queues, among other example issues). In some implementations, a transmitter may check rx_empty before initiating a disconnect. By checking, it increases the probability that the disconnect is quickly accepted (e.g., in absence of possible in-flight requests that have not yet registered in at the receiver). In some implementations, to further increase the probability of disconnect acceptance, the transmitter may implement a timer delay after the last valid message sent such that the receiver pipeline would have time to drain into the receiver queues, among other example features. In some implementations, during initialization, the transmitter sends messages as soon as any credits are available and not dependant on a rx_empty assertion. Alternatively, a transmitter may stall the sending of any packets after initialization until rx_empty is asserted, the transmitter can use the credits received as an indication of the total credits a receiver has advertised. In an example implementation of an SFI interface, a transmitter can send packets when it receives sufficient credits from the receiver. The transmitter may identify the packet is to be transmitted and determine that there are respectively sufficient HDR and Data credits for the packet before the transmission begins.

As further examples of signaling rules, which may be defined in a UFI implementations, connection ACKs may be defined to always follows connection requests. As noted above, a connection request may be signaled by txcon_req transitioning from 0 → 1. This transition serves as an indication that the transmitter Tx is ready to receive credits and is in normal operation. An ACK may be signaled by rxcon_ack transitioning from 0 → 1. An ACK may be stalled for an arbitrary time until a receiver is ready to complete. Similarly, disconnect ACKs or NACKs may be defined to follow disconnect requests. A disconnect request may be is signaled by a txcon_req transition from 1 → 0. A disconnect ACK may be signaled by an rxcon_ack transition from 1 → 0. A disconnect NACK may be signaled by an rxdiscon_nack transitioning from 0 → 1. A rule may be defined to require a receiver to either respond with an ACK or NACK to each disconnect request it receives, among other example policies and implementations.

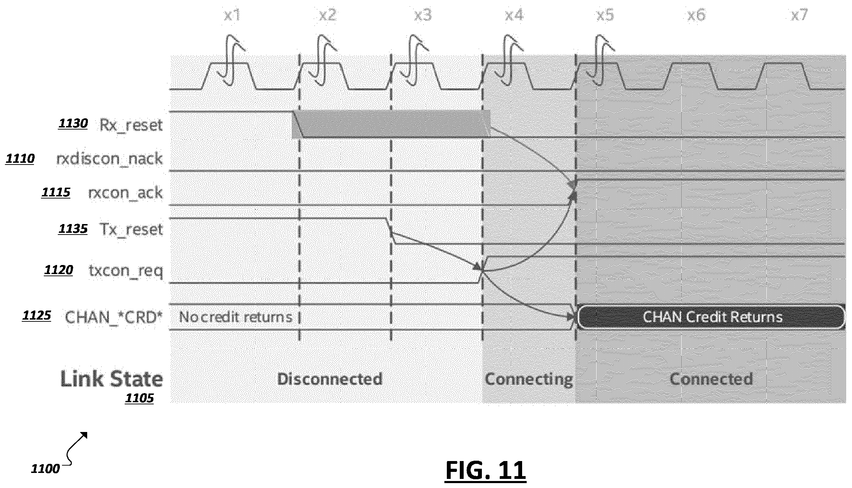

Turning to FIG. 11, an example timing diagram 1100 is illustrated for initialization of an SFI interface from a Reset to a Connected state. In the particular example illustrated in FIG. 11, an example initialization flow is illustrated utilizing initialization signals in a Global channel of the SFI interface. As shown in FIG. 11, the initialization signal set may include a receiver disconnection NACK signal 1110, a receiver connection ACK signal 1115, and a transmitter connection request signal 1120. Additional signals are shown to illustrate certain features, including a receiver reset signal 1130 (to cause the agent to enter a reset condition), a transmitter reset signal 1135 (to cause the fabric to enter a reset condition). Also illustrated is a representation of at least one of the SFI channels' credit return signal set 1125 (e.g., the credits signal set for one or more of the HDR and DATA channels).

To enter a connected state, once the transmitter is out of reset, it may assert the txcon_req signal 1120 to identify the request to the receiver. Similarly, when the receiver is out of reset, it waits for a connection request on the txcon_req signal 1120. The assertion of the connection request can be an arbitrary number of cycles after the reset (e.g., 1130) asserts. Until the connection is complete, the txcon_req signal 1120 is to remain asserted and is to only de-assert as part of the disconnect flow. Upon receiving a connection request on the txcon_req signal 1120, the receiver may assert the rxcon_ack signal 1115 to acknowledge the request. The rxcon_ack signal 1115 may be asserted after the resets of receiver and transmitter and the assertion of the txcon_req signal 1120. The rxcon_ack signal 1115 is to remain asserted and is to be first deasserted only in a disconnect flow.

This sequence may allow the initialization link state 1105 to progress from a Disconnected to a Connecting to the Connected state. Upon entering the Connected state (and sending the rxcon_ack signal) the receiver may immediately begin returning credits (e.g., on credit return wires 1125. Indeed, the receiver may start to return credits simultaneously with the assertion of rxcon_ack signal 1115. Accordingly, the transmitter (e.g., the agent) is prepared to accept credit returns upon asserting the txcon_req signal 1120 (e.g., at clock cycle x4), for instance, because credit returns might be observed before observation of A2F_rxcon_ack due to intermediate buffering or clock crossings. After the minimum credits are received to send packets, the transmitter can start sending packets or messages over the channel. The reconnect flow may be implemented similar to the connect from reset flow discussed herein, however, to start a new credit initialization, the receiver will first reset its credit counters to reset values and the transmitter is to reset its credits available counters to zero, among other example implementations.

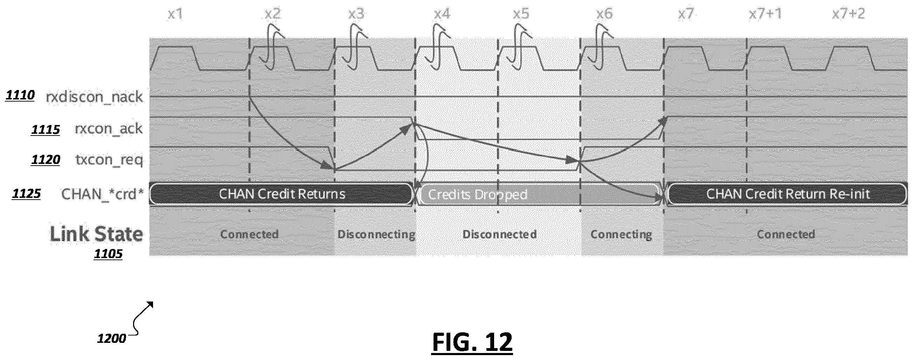

Turning to FIG. 12, an example timing diagram 1200 is shown illustrating an example disconnect and reconnect flow for an example SFI interface. In this example, the transmitter may de-assert the txcon_req signal 1120 to facilitate a disconnect at time x3. In some implementations, to allow the disconnect to progress, the rxdiscon_nack signal 1110 is to be deasserted before txcon_req signal 1120 is de-asserted. When a disconnect is requested, the transmitter is to no longer be sending messages on any channel (e.g., indicated by CHAN_is_valid bit assertion). Based on the initiation of a disconnect flow by the transmitter, the receiver is to decide whether to acknowledge (ACK) or negatively acknowledge (NACK or reject) the disconnect. To acknowledge the disconnect, the receiver may de-assert the rxcon_ack signal 1115 after ensuring all pipelines are empty (e.g., at clock cycle x4), which marks the entry into a disconnected state (as reflected by link state indicator 1105). In some instances, the receiver can also ensure that all credits have been returned.

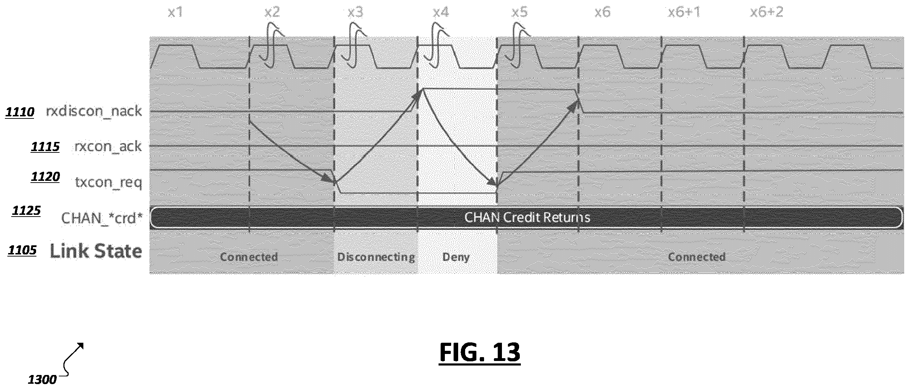

While the diagram 1200 of FIG. 12 illustrates an instance where a disconnect request was positively acknowledged by the receiver, FIG. 13 illustrates a contrary example where the receiver responds with a negative acknowledgement (or NACK). For instance, to send a negative acknowledgment, the receiver may instead assert the rxdiscon_nack signal 1110 (e.g., at clock cycle x4). For instance, the negative acknowledgement may be selected if the receiver determines that it is unable to drain its pipelines without risking deadlock, among other example reasons. After the NACK, the transmitter is to reassert the txcon_req signal 1120 (e.g., at clock cycle x6). Upon observance of this effective acknowledgment by the transmitter of the receiver's NACK, the rxdiscon_nack signal 1110 can be de-asserted (e.g., as shown at clock cycle x6 in the example of FIG. 13).

In some implementations, the connect and disconnect flows are expected to complete within a few microseconds after initiation. In some implementations, a timeout may be defined, explicitly or implicitly. For instance, a receiver may be configured to reply with an ACK or NACK within a defined or recommended window of time. For instance, the agent, fabric, or system (e.g., SoC) can define a timeout or time window to enforce this expectation.

In some instances, an agent or fabric element may reset while the SFI interface is in a connected state, resulting in a surprise reset. For instance, the defined or recommended flow may be to enter Disconnect before Reset. As one example, a rxcon_ack signal may transition 1 → 0 occurs because of a surprise reset on receiver side of the link while value of the transmitter's txcon_req signal is 1. In such a case, the transmitter may force itself to a disconnected state and restart initialization. If this happens when the transmitter is in an idle state, it can recover without loss of messages. As another example of a surprise reset, if the txcon_req signal transitions 1 → 0 because of a surprise reset on the transmitter side of the link while the rxcon_ack is 1, the standard disconnect flow may be followed. If this happens when receiver is in an idle state, disconnect should receive Ack and cleanly reach a disconnected state provided transmitter stays in reset. If the disconnect is Denied (NACK) by the receiver, however, a fatal or illegal link state may result (e.g., an unrecoverable error). In cases of surprise resets, if traffic is active (e.g., not idle), a loss of protocol messages can result and may be fatal to continued normal operation.

As discussed above, an SFI interface in a system may be configurable according to a variety of parameters. For instance, a set of parameters may be specifically defined in accordance with the use case, features, protocols, and topology of a given system, such as a particular SoC design. Such parameters may define, for instance, the maximum number of headers that can be transmitted in a single cycle, the maximum header size, the maximum number of payloads of different packets that may be sent in a single cycle, among other example parameters.. Parameters values may be defined and saved, for instance, in a configuration register or other data structure for use and reference by the agent and fabric components connected through the interface. Table 6 presents an example of parameters, which may be set in one example of an SFI interface.

**Table 6: Parameters Supported**

| **Parameter** | **Description** |
|---|---|
| VT | Width of tx_vendor_field |
| VR | Width of rx_vendor_field |
| M | Maximum number of Headers that can be transmitted on a given cycle |
| MAX_HDR_WIDTH | Maximum size of 1 header in bytes. One header credit corresponds to MAX_HDR_WIDTH bytes of storage. A minimum and maximum of one credit is used per header transfer. |
| H | Total width of header in bytes. It is MAX_HDR_WIDTH*M. |
| MAX_FC_VC | Maximum number of FC and VC ID combinations that can be received in 1 cycle. It is recommended that this be 1. This parameter applies to both HDR and DATA Layers. |
| D | Total width of the data signal in bytes. This must be a multiple of 4. |
| DS | Maximum number of independent data packets that can be sent in 1 cycle. |
| DATA_PASS_HDR | If set to 1, TX can allow Data to race ahead of the corresponding Header. If set to 0, TX will always send Header before the corresponding Data. It is recommended that this parameter be set to 0, so that the RX data tracking is simplified. |

### NON-FLIT MODE TUNNELING FOR END-TO-END ENCRYPTION

As introduced above, SFI may utilize PCIe Flit Mode (FM) header formats and semantics, even when PCIe/CXL.io links train to non-Flit Mode (NFM). For instance, PCIe Flit Mode may define a transaction layer packet (TLP) grammar with: (1) zero or more one data word (1DW) local vendor-defined TLP prefixes followed by (2) a TLP header base with size indicated by Type[7:0] field, followed by zero to 7 DW of Orthogonal Header Content (OHC) as indicated by the OHC[4:0] field in the TLP header base. (3) TLP data payload of 0 to 1024DW may follow the TLP header base, followed by (4) a TLP Trailer (if present as indicated by TS[2:0] field of the header base), and then (5) zero or more 1DW end-to-end suffixes. When links train to NFM, I/O fabrics or interconnects that use SFI rely on the Transaction Layer to perform the FM/NFM conversions to ensure that only FM formats are carried over SFI. However, because not all NFM fields have a FM equivalent mapping, including NFM Reserved fields, this can compromise attempts to encrypt the corresponding data (e.g., according to CXL TLP Integrity and Data Encryption (IDE), etc.). In conventional implementations, NFM-to-NFM communication with IDE encryption is only available with non-streaming interfaces. In some implementations, logic (e.g., implemented in circuitry implementing the interface) may enable two NFM-trained links to communicate while preserving the benefits of the SFI fabric and not compromising packet integrity while preserving the benefits of cut-through routing and receiver decoding simplicity of Flit Mode formats, among other example benefits. For instance, flit format extensions may be defined to tunnel NFM-unique header information through FM header structures to enable NFM-to-FM-to-NFM end-to-end encryption. This may include all NFM Reserved fields that don't have a FM equivalent, all NFM non-Reserved fields that don't have a FM equivalent, and a new hint to notify the destination of the changes to the packet formats to be decoded accordingly, among other example features.

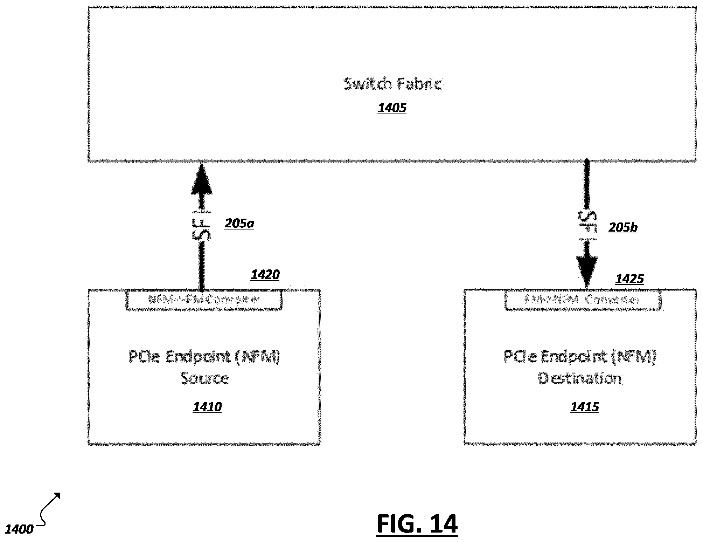

Turning to FIG. 14, a simplified block diagram 1400 is shown of an example topology that implements an SFI-based fabric 1405 to connect two PCIe links (e.g., between PCIe endpoint 1410 and PCIe endpoint 1415) that have trained to non-Flit Mode (NFM). As SFI packet formats are to follow PCIe Flit Mode (FM) packet formats, the source (e.g., 1410) is responsible for mapping the NFM headers to FM formats (e.g., using NFM-to-FM converter 1420) before transmitting over SFI 205a. Similarly, the destination (e.g., 1415) is responsible for mapping the FM headers received over SFI 205b back to NFM formats (e.g., using FM-to-NFM converter 1435).

Conventional devices do not support selective IDE streams for an NFM device (e.g., 1410) communicating with another NFM device (e.g., 1415) through an SFI-based fabric (e.g., 1405). Converter logic (e.g., 1420, 1425) may be provided at such devices to tunnel all NFM-unique fields through existing SFI capabilities to allow end-to-end encryption while preserving the streaming benefits of the SFI interface and not adding decoding complexity for the fabric. In one example, the NFM-to-FM converter circuitry (e.g., 1420) is to identify all NFM format Reserved fields (e.g., as defined in PCIe 6.0 or later), identify all (e.g., PCIe 6.0) NFM format fields without a FM equivalent, and define SFI format extensions to tunnel NFM fields through to the destination device (e.g., 1415).

In accordance with one example implementation, Table 7 lists PCIe 6.0 NFM Reserved fields for all formats and prefixes and how to map them to SFI formats:

**Table 7: Mapping of Reserved NFM Fields to SFI**

| **NFM Structure** | **NFM Reserved Field/Bits** | **Width** | **SFI Placement** |
|---|---|---|---|
| Memory Request Header | Byte 1, Bit 1 | 1 | Tunnel through new prefix (LN) |
| | Last DW BE | 4 | Always insert OHC-A* for all Fmt/Types |
| | First DW BE | 4 | Always insert OHC-A* for all Fmt/Types |
| | Addr[1] for Translation Requests | 1 | Tunnel through Address[1:0] position |
| | PH when TH=0 | 2 | Tunnel through Address[1:0] position |
| I/O Request Header | Byte 1, Bit [1] | 1 | Tunnel through new prefix (LN) |
| | A2 | 1 | Present in FM Common Packet Header definition |
| | TH | 1 | Tunnel through new prefix (TH) |
| | Byte 11, Bits [1:0] | 2 | Present in FM I/O Request Header definition |
| Config Request Header | Byte 1, Bit [1] | 1 | Tunnel through new prefix (LN) |
| | A2 | 1 | Present in FM Common Packet Header definition |
| | TH | 1 | Tunnel through new prefix (TH) |
| | Byte 10, Bits [7:4] | 4 | Present in FM Config Request Header definition |
| | Byte 11, Bits [1:0] | 2 | Present in FM Config Request Header definition |
| Message Request Header | Byte 1, Bit [1] | 1 | Tunnel through new prefix (LN) |
| | A2 | 1 | Present in FM Common Packet Header definition |
| | Attr | 2 | Present in FM Common Packet Header definition |
| | TH | 1 | Tunnel through new prefix (TH) |
| | Bytes 8-15 | 64 | Present in FM Message Request Header definition |
| Completion Header | Byte 1, Bit [1] | 1 | Tunnel through new prefix (LN) |
| | TH | 1 | Tunnel through new prefix (TH) |
| | Byte 11, Bit [7] | 1 | Tunnel through OHC-A5 reserved space |
| TPH Prefix | Byte 2, Bits [3:0] | 4 | Tunnel through new prefix (TPH Rsvd) |
| | Byte 3, Bits [7:0] | 8 | Tunnel through OHC-B reserved space |
| PASID Prefix | Byte 1, Bits [7:6] | 2 | Tunnel through new prefix (PASID Rsvd) |

Similarly, Table 8 lists PCIe 6.0 NFM fields for all formats and prefixes that do not have a FM equivalent and how to map them to SFI formats in one example:

**Table 8: Mapping of NFM Fields with no FM Equivalents to SFI**

| **NFM Structure** | **NFM Reserved Field/Bits** | **Width** | **SFI Placement** |
|---|---|---|---|
| I/O | AT | 2 | Tunnel through new prefix (AT) |
| Config | AT | 2 | Tunnel through new prefix (AT) |
| Message | AT | 2 | Tunnel through new prefix (AT) |
| Completion | AT | 2 | Tunnel through new prefix (AT) |
| | BCM | 1 | Tunnel through new prefix (BCM) |
| PASID Prefix | PMR | 1 | Tunnel through OHC-A4 |
| | ER | 1 | Tunnel through OHC-A4 |

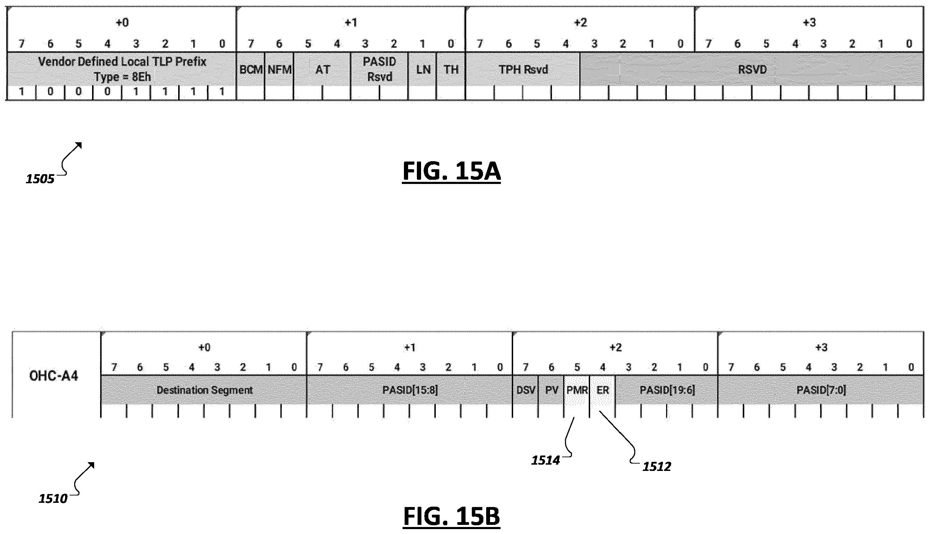

Turning to FIG. 15A, an example NFM Prefix definition is illustrated for use in tunnelling NFM fields through SFI. Table 9 includes a description of the fields shown in the example NFM Prefix 1505:

**Table 9: Description of Fields in NFM Prefix**

| **Bits** | **Field** | **Description** |
|---|---|---|
| 7:0 | Type | Vendor Defined Local TLP Prefix |
| 8 | TH | TLP Hints (TH) field from NFM Common Packet Header (byte1, bit0) |
| 9 | LN | Former Lightweight Notification (LN) reserved bit from NFM Common Packet Header (byte1, bit1) |
| 11:10 | PASID Rsvd | Reserved bits from NFM PASID Prefix (byte1, bits 5:4) |
| 13:12 | AT | Address Translation' field from NFM Common Packet Header (byte2, bits 3:2) |
| 14 | NFM | Tunneled indication that origin of header was an NFM |
| 15 | BCM | Byte Count Modified' from NFM Completion Header (byte 6, bit 4) |
| 19:16 | RSVD | Reserved for future usage |
| 23:20 | TPH Rsvd | Reserved bits from NFM TPH Prefix (byte 2, bits 3:0) |
| 31:24 | RSVD | Reserved for future usage |

To tunnel the additional bits of an example NFM packet through to a destination using SFI, the NFM Prefix (e.g., defined as a new PCIe FM vendor defined local TLP prefix) may be utilized. For instance, when tunneling is supported, the SFI NFM Prefix (e.g., 1505) is to be inserted after any other local TLP prefixes and before the rest of the protocol header (e.g., PCIe flit mode base header). In one example, an NFM field 1506 is included in the NFM prefix 1505. When the NFM field is encoded with a value of "1", the Address[1:0] position in the base header is to have same definition as NFM formats (e.g., for all format types). Further, when NFM = 1, the Address Type (AT) bits for the flit are provided from the AT field 1507 of the SFI NFM Prefix 1505. However, if the NFM field 1506 is encoded with a "0", the base header and OHC formats of the flit are to strictly follow the defined (e.g., PCIe) FM formats.

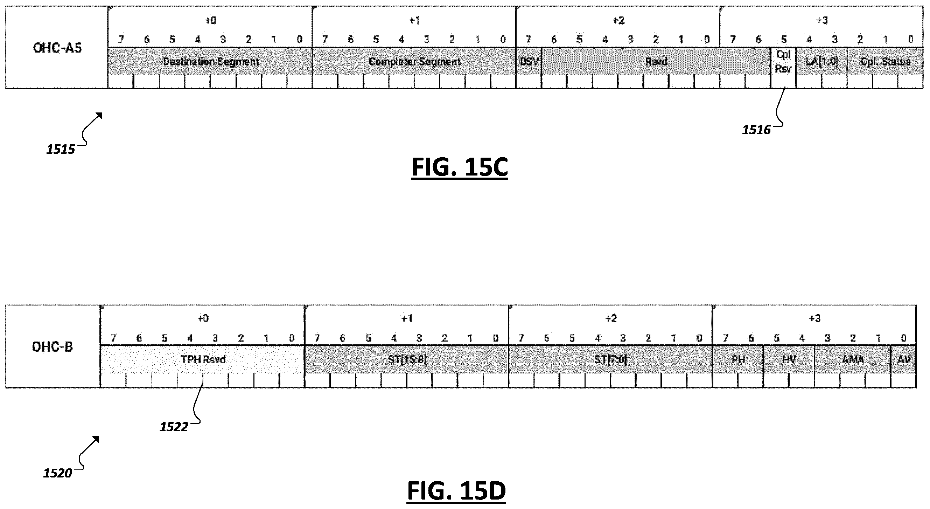

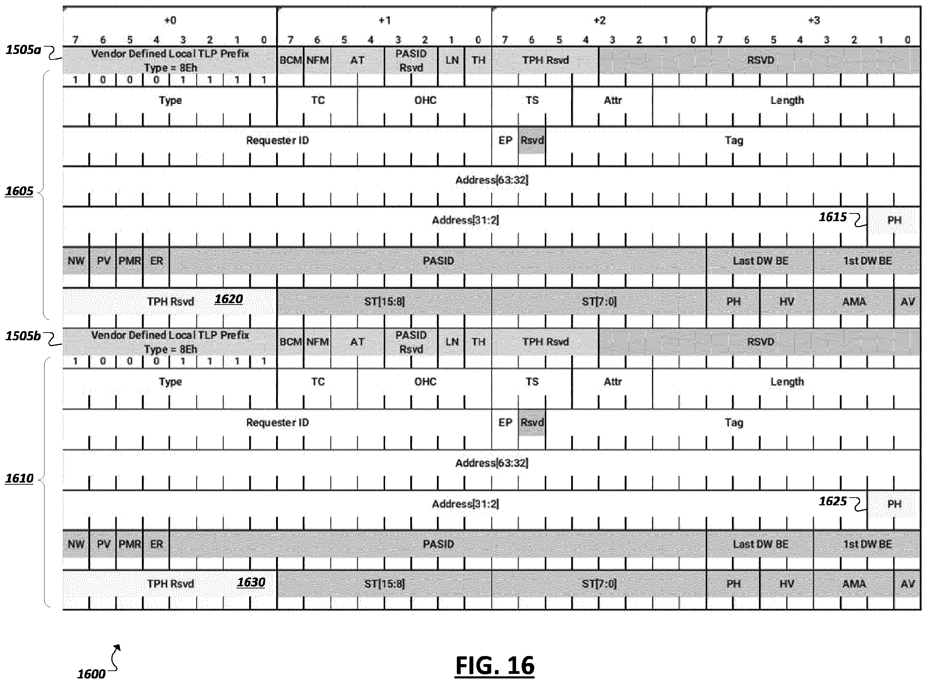

In some implementations, in addition to the definition of a new prefix, NFM/FM conversion in SFI may be further supported through the definition of new SFI-specific extensions of PCIe 6.0 FM formats, which may be used when the NFM field 1506 of the NFM prefix indicates an NFM format of the data (e.g., when NFM = 1). For instance, FIGS. 15B-15D show example extensions to PCIe FM defined Orthogonal Header Content (OHC). For instance, in FIG. 15B, an extension to the PCIe OHC-A4 definition is illustrated where one or more bits (e.g., bits 20 and 21) are repurposed to carry NFM information, such as an Execute Requested (ER) field 1512 from NFM PASID Prefix for Messages field and a Privileged Mode Requested (PMR) field 1514 from NFM PASID Prefix for Messages. In another example, FIG. 15C, an extension to the PCIe OHC-A5 definition is illustrated where one or more bits (e.g., Reserved bit 29) are repurposed to carry NFM information, such as NFM Completion Header Reserved bit (byte 11, bit 7) 1516. As another example, as shown in FIG. 15D, an extension to the PCIe OHC-B definition is illustrated where one or more bits (e.g., Reserved bits 7:0) are repurposed to carry NFM information, such as NFM TPH Prefix Reserved field (byte 3, bits 7:0) 1522, among other examples (such as discussed above). FIG. 16 shows an example SFI header transfer 1600 consisting of two 64-bit memory write protocol headers 1605, 1610, both with the NFM Prefix 1505a, 1505b inserted and relevant SFI extensions (e.g., 1615, 1620, 1625, 1630, etc.) to the base header 1615 and OHC-B 1620, among other examples.

### BUFFERLESS SHARED/DEDICATED CREDIT GASKET

As introduced above, SFI may support a mix of shared and dedicated credits for communications between an SFI received and an SFI transmitter over an SFI interface. An SFI Receiver that implements shared buffers and operates in block size operations to utilize the streaming benefits of SFI may, in some implementations, be paired with and communicate with an SFI Transmitter that is incapable of sharing credits, and instead relies exclusively on dedicated credits. While a store and forward approach could be attempted to address such a situation, such a solution would be both costly from an area and latency perspective (e.g., storing and forwarding of at least minimum packet size-sized credits for every supported combination of flow control (FC) or virtual channel (VC)). For instance, in PCIe, six types of information (e.g., Posted Request headers (PH); Posted Requests Data payload (PD); Non-Posted Request headers (NPH); Non-Posted Request Data payload (NPD); Completion headers (CplH); and Completion Data payload (CplD)) may be tracked by flow control for each virtual channel, resulting in six FC/VC combinations for each VC.

In an improved implementation, a lightweight credit conversion gasket (e.g., implemented in circuitry of a device implementing the SFI interface) may be provided to manage the shared credit pool conversion from the Receiver into dedicated credits to the Transmitter while being buffer-less and implementing anti-starvation controls as well as QoS and bandwidth shaping algorithms. For instance, an SFI Receiver may advertise shared credits to credit gasket logic. The credit gasket may accumulate credit returns from the Receiver, and tracks credits required by each enabled FC/VC at the Transmitter to achieve a desired level of link utilization. The credit gasket may identify and consider the Receiver occupancy and throttle dedicated credit returns at an FC/VC granularity for anti-starvation protection. By tracking and assigning Receiver credits in block size, the credit gasket may eliminate the need for storage and minimize the impact to header/data latency. Link utilization monitoring may also be used to adjust credit assignments and control dynamic bandwidth allocation to reduce receiver storage requirements. Such a solution may be provided as a plug-and-play extension for Receivers to provide flexibility in communicating with agents of varying crediting capabilities while minimizing area, latency costs, and implementation complexity.

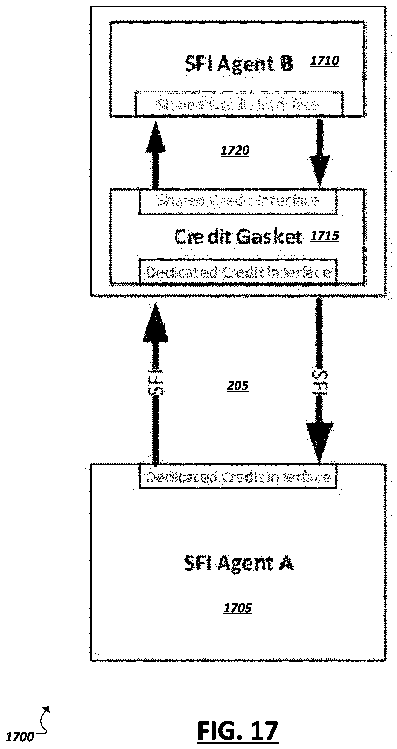

FIG. 17 is a simplified block diagram 1700 showing an example topology with an SFI-compliant credit gasket 1715 that can bridge the gap between an example SFI Receiver (e.g., SFI Agent B 1710) and the SFI Transmitter (e.g., on SFI Agent A 1705), where the transmitter only supports dedicated credits (e.g., with a dedicated credit pool for each FC/VC combination implemented on the link), while avoiding the use of costly buffers to store-and-forward. The credit gasket 1715 in some implementations, may be implemented as a circuitry block separate from that used to implement the corresponding SFI receiver (e.g., on SFI Agent B 1710) and may couple to the agent block 1710 using a shared credit interface 1720 based on SFI. In other implementations, credit gasket 1715 logic may be implemented on the receiver itself (e.g., and enabled/disabled based on the capabilities of the transmitter to which it is coupled and with which it communicates over a corresponding SFI interface 1715. The credit gasket 1715 may act as a translation tool between a shared credit regime and a dedicated credit regime in SFI. Accordingly, the credit gasket 1715 may interface with the transmitter, which only supports dedicated credits, using a dedicated credit interface 1720 (based on SFI). The credit gasket 1715 may accept shared credit returns from the corresponding SFI Receiver (e.g., 1710), manage the translation of these shared credit returns to dedicated credit returns, and then distribute the converted dedicated credits on a corresponding basis to the SFI transmitter (e.g., 1705) to its enabled FC/VC combinations.

The credit gasket 1715 may expose a programmable interface (e.g., to system software or firmware) to allow the credit gasket to be informed of which FC/VC combinations at the SFI Transmitter are active, and how many dedicated credits should be respectively allocated to each (e.g., credits for the HDR and DATA layers). The number of dedicated credits allocated may depend on the link utilization rate desired for each FC/VC and the delay properties of the link, among other example considerations. For instance, as a simplified example, if only one FC/VC is active for an SFI link configured to send two headers per cycle with a credit loop latency of 4 cycles and no additional constraints, the gasket would be configured to track 8 dedicated credits for that FC/VC, among other (potentially much more complex) examples.

To facilitate the conversion of shared credits to dedicated credits, the credit gasket 1715 may track, for each FC/VC the credit deficit and pending credit returns for each FC/VC, together with the size of the remaining shared credit pool, among other example information. The credit "deficit" is the mechanism the credit gasket uses to track how many credits it should provide for a given FC/VC and relates to the difference in the credits currently demanded by the FC/VC and those allocated. Once the deficit is satisfied, no other credits should be assigned (until another deficit is identified). When the deficit is increased for a given FC/VC, the credit gasket determines that more credits should be allocated to the FC/VC than previously or originally allocated. In one example, the credit gasket 1715 tracks this per-FC/VC deficit by initializing counters to the programmed values, and then decrementing on every credit return and incrementing on every valid SFI header or data transfer for that FC/VC combination.

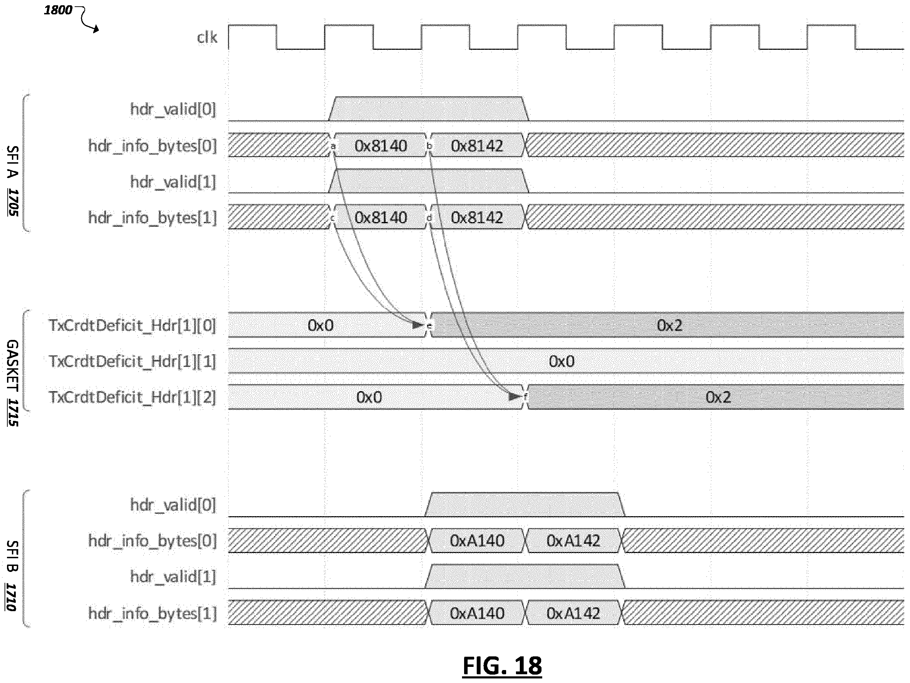

For instance, FIG. 18 is a timing diagram 1800 illustrating an example of the involvement of a credit gasket 1715 disposed between an example transmitter 1705 and receiver 1710, where the transmitter only supports dedicated credits and the credit casket tracks the deficit based on valid SFI transfers. For instance, the transmitter 1705 may send a first pair of headers (e.g., 1805, 1810) for FC/VC [1][0] followed by a second pair of headers (e.g., 1815, 1820) for FC/VC [1][2]. The credit gasket detects the transmission of headers 1805, 1810 from SFI A 1705 to SFI B 1710 and counts the number of credits (e.g., two credits) against those allocated for [1][0] (at 1825) and similarly identifies the transmission of headers 1815, 1820 and counts the number of credits used (e.g., two credits) against those allocated for [1][2] (at 1830). As no transmission had been detected utilizing header credits for FC/VC [1][1], no adjustment is made to the credit tracker for FC/VC [1][1] (at 1835). In some implementations, the SFI signals may include a signal to identify whether a shared or dedicated credit is to be used. As the transmitter 1705 sends the header with information (e.g., in hdr_info_bytes[1] (1840)) to indicate that it is using dedicated credits, the credit gasket 1715 may modify the header information before it is delivered to the receiver 1710 to instead indicate that shared credits are being used (thereby allowing the receiver to operate unaware of the dedicated credit regime used by the transmitter or the manipulation of the credit regime by the credit gasket). For instance, in one example, a `Header used Shared Credit' bit of SFI-defined hdr_info_bytes may indicate whether dedicated or shared credits are used. In this case, the credit gasket may flip the `Header used Shared Credit' bit from a value indicated "dedicated" (e.g., hdr_info_bytes "0x8140") to another value indicating "shared" (e.g., hdr_info_bytes "0xA140) before forwarding the signal upstream to the SFI Receiver 1710, among other examples.

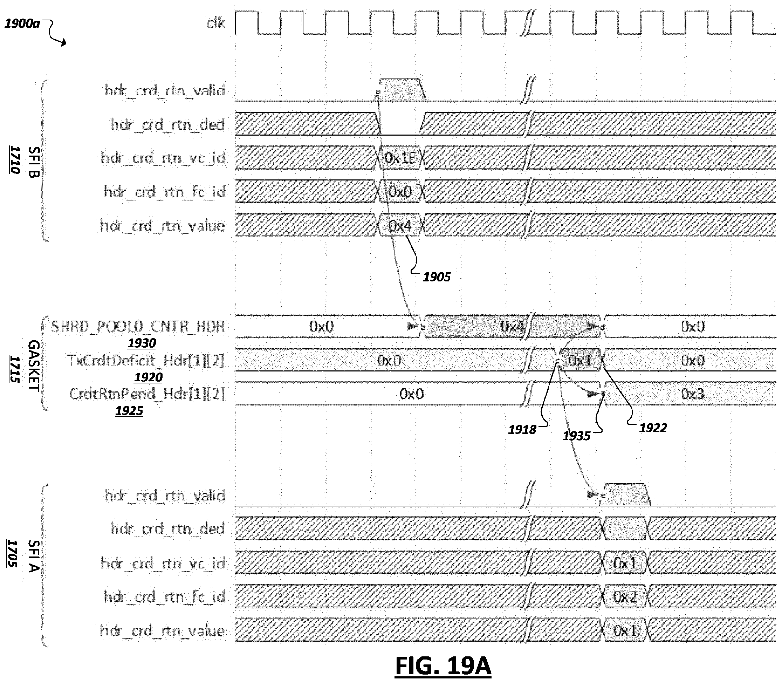

As noted above, the credit gasket 1715 may identify the number of credits initially allocated to each FC/VC combination and continually monitor whether the FC/VC falls into a credit deficit. For instance, if any FC/VC combinations are determined to be in deficit based on programming, the credit gasket may then act to arbitrate credit assignments by assigning additional block-sized chunks of credits. In the example of FIG. 19A, a scenario is illustrated where the deficit for an active FC/VC is smaller than the block size, and shows extra credits being assigned to the Pending Return counter 1925 from the shared pool (as tracked by shared pool counter 1930) at 1935. For instance, as illustrated in the timing diagram 1900a of FIG. 19A, a receiver (e.g., 1710) may send a number of credit returns (e.g., 1905) and the credit gasket 1715 may identify the credit returns and initially return the credits to the shared credit pool (as tracked using shared credit pool counter 1925). When the dedicated credit pool of the FC/VC is adjusted (along with the corresponding credit deficit counter (e.g., 1920, etc.)) a credit deficit condition may be identified (e.g., at 1918) for the FC/VC by the credit gasket. Credit deficits may occur either due to initialization or adjustment of the credit allocation or due to the transmitter sending valid packets through (and the credit gasket recognizing that it should replenish those credits). Credits from the shared pool may be reallocated to cure the deficit (e.g., 1 credit (at 1922)). If any surplus credits remain from a block-sized chunk after the deficit has been met, these may be stored off in a separate Pending Return counter 1925 that tracks shared credits that have been assigned to a specific FC/VC (e.g., FC/VC [1][2]), but have not yet been returned to the SFI Transmitter 1705. Future deficits for that specific FC/VC may consume credits from the Pending Return counter before arbitrating to consume more shared credit resources.

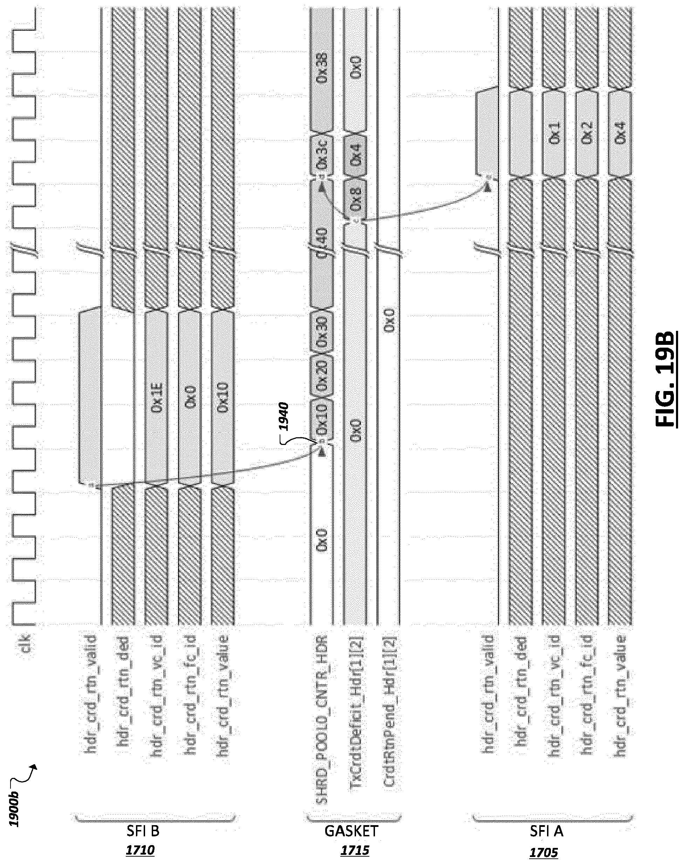

Turning to FIG. 19B, a timing diagram 1900b is shown illustrating an example credit initialization and release using an example credit gasket 1715. For instance, during initialization, the SFI Receiver 1710 advertises shared credits using the SFI-reserved FC/VC combinations, such as outlined in the SFI Specification. The credit gasket intercepts this advertisement and uses these returns to increment internal shared credit pools (at 1940). For instance, in the example of FIG. 19B, an example credit exchange during initialization (e.g., an initial 40 credits (e.g., 4x cycles of "0x10" credit returns)) is shown together with the subsequent release as dedicated credits (e.g., advertising 4 credits in two consecutive cycles to cover an 8 credit deficit). Post initialization, shared credit returns are first incremented into a per-FC/VC accumulator that aims to collect credits in SFI block-sized chunks. Once a block-sized chunk has been collected, the gasket checks whether that FC/VC is in deficit. If in deficit, the block-sized chunk of credit is directly assigned to that FC/VC by adding the credits to that FC/VCs Pending Return count. If not in deficit, the credits are used to increment the internal shared credit pools using a programmable mapping to translate FC/VC combination to the shared pool.

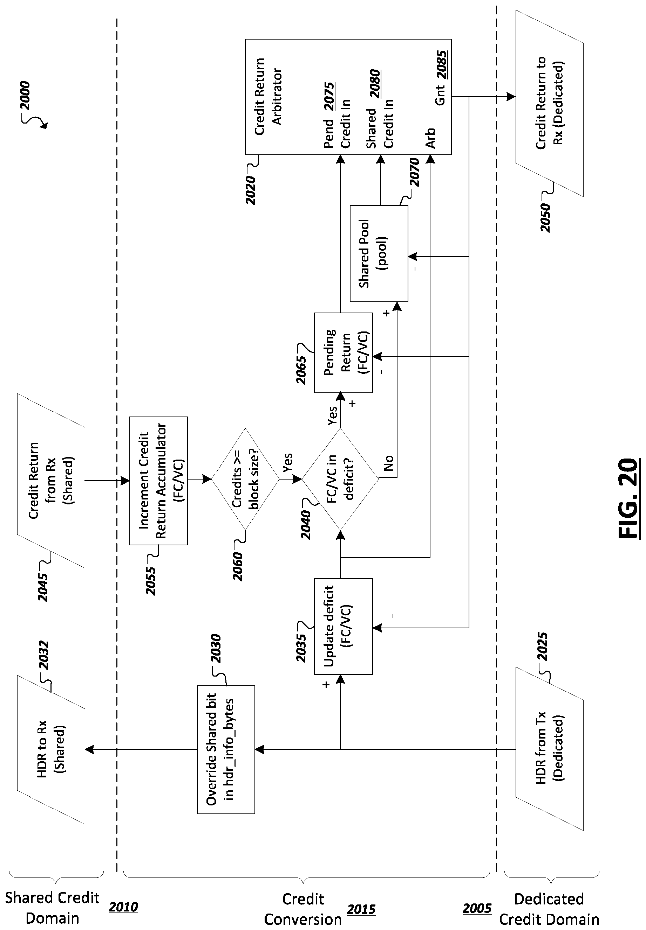

Turning to FIG. 20, a simplified block diagram 2000 is shown illustrating an example logical flow within an implementation of a credit gasket. A first interface 2005 may implement a dedicated credit domain to interface with an agent with a transmitter that only supports dedicated credits. A second interface 2010 may implement a shared credit domain to interface with an agent with a receiver that supports shared credits (and potentially a mix of shared and dedicated credits). Credit conversion logic 2015 may determine how credits are converted between a dedicated credit regime and a shared credit regime. The credit conversion logic 2015 may include credit return arbitration logic 2020, which may be utilized to arbitrate the provisioning of credits from the receiver's shared credit pool to the potentially multiple FC/VC combinations' dedicated credit pools as understood by the transmitter (and virtualized by the credit gasket). Transfers, such as headers, may be received (at 2025) from the transmitter at the credit gasket and may indicate that dedicated credits are to be applied. The credit gasket may override such fields (at 2030) before forwarding (at 2032) to the receiver over the appropriate channel of the SFI interface to instead indicate to the receiver that shared credits are to be used. Additionally, upon the receipt of the data transfer, depending on the size of the data transfer (and FC/VC of the data transfer), the credit gasket may update 2035 the credit deficit being tracked for that particular FC/VC by increasing the deficit by the number of credits used for the data transfer. Based on this update, the credit gasket may determine (at 2040) whether the FC/VC dedicated pool is in a deficit position or not.

Continuing with the example of FIG. 20, the receiver may issue (at 2045) credit returns to be converted by the credit gasket and forwarded (at 2050) to the transmitter. When credits are returned by the receiver, a credit return accumulator is incremented based on the number of credits returned. A block size may be determined (e.g., during initialization) for the FC/VC and the credit gasket may determine (at 2060) whether the number of credits are greater than or equal to the block size. If the credits accumulated for the FC/VC are greater than the block size, the credit gasket then determines (at 2040) if the FC/VC is in deficit or not. If the FC/VC is in a deficit, the returned credits (e.g., above the block size threshold) are used to increment a pending credit return counter (at 2065) (to indicate the number of credits that have been issued and are awaiting return for the FC/VC). If, however, the FC/VC is not in deficit, this may indicate a state of under-use of the FC/VC, resulting in the credits being instead allocated back to the shared pool (whose counter is incremented accordingly (at 2070)).

In some implementations, a credit gasket may include a configurable credit return arbitrator 2020 to assess the status of the credit gasket counters to arbitrate in the issuance of credits to the various FC/VC combination supported by the transmitter and ensure the shared credit pool supported by the receiver are dynamically allocated in an efficient manner. For instance, the credit return arbitrator 2020 may determine from the pending return credit counter (at 2075) and the shared pool counter (at 2080), whether to issue a credit return back to the transmitter (at 2085), for instance, when update to the credit deficit counter of the FC/VC occurs. The credit return arbitrator 2020 may determine to either grant the credit return (at 2050) or, instead, pull back credits from those allocated to the FC/VC (at 2035), among other example implementations. The credit return arbiter 2020 may be implemented in hardware circuitry and may provide an interface through which software or firmware is able to configure the algorithms utilized by the credit return arbiter 2020 in determining how to arbitrate credit returns by the credit gasket, among other example implementations.

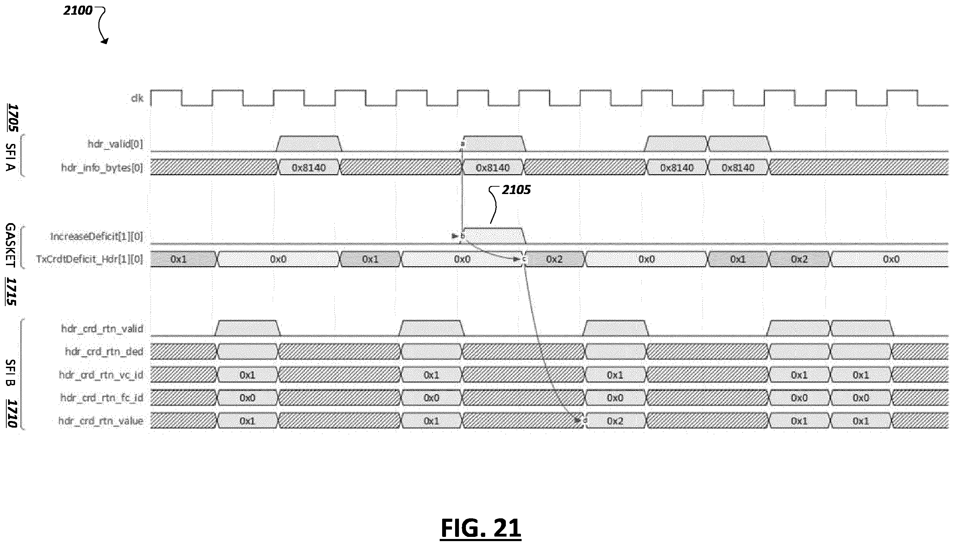

In some implementations, the initialized deficit for an enabled FC/VC should at least fully cover one packet for deadlock avoidance (e.g., 1 header credit, maximum payload size (MPS)-sized data credits) and can be static or dynamic (e.g., as directed by software). In the static case, the initialized deficit should be set as high as needed to achieve the desired link utilization rate. If multiple FC/VC combinations are active, this could result in larger storage demands for the receiver. This can be compounded if the per-FC/VC activity is not uniform, and some FC/VC combinations experience periods of high activity and periods of low activity. To mitigate this, in some implementations, the credit gasket may dynamically adjust the tracked credit deficit over time depending on FC/VC activity to reduce Receiver storage demands and save area. This allows for dynamic credit and bandwidth allocation between the active FC/VCs. In this scenario, the deficit would be initialized to only cover the MPS-sized packet at reset to allow for initial traffic flow. As the link is used by an FC/VC (e.g., detected by counting number of valid packets from a given FC/VC in a configurable time window), the credit gasket can choose to maintain, increase, or decrease the deficit. If the deficit is increased due to increased activity from an FC/VC, it may result in the credit gasket arbitrating for more shared pool credit resources to assign to the FC/VC. If the deficit is decreased due to reduced activity from an FC/VC, it will result in the credit gasket reducing the number of credits assigned to the FC/VC. For instance, the timing diagram 2100 illustrated in FIG. 21 demonstrates a deficit increase scenario due to increased activity from an FC/VC. For instance, based on detecting higher traffic on the FC/VC[1][0], the credit gasket may increase credit allocation by increasing the deficit (at 2105), which may allow a higher number of credits to be returned to and used by the transmitter.

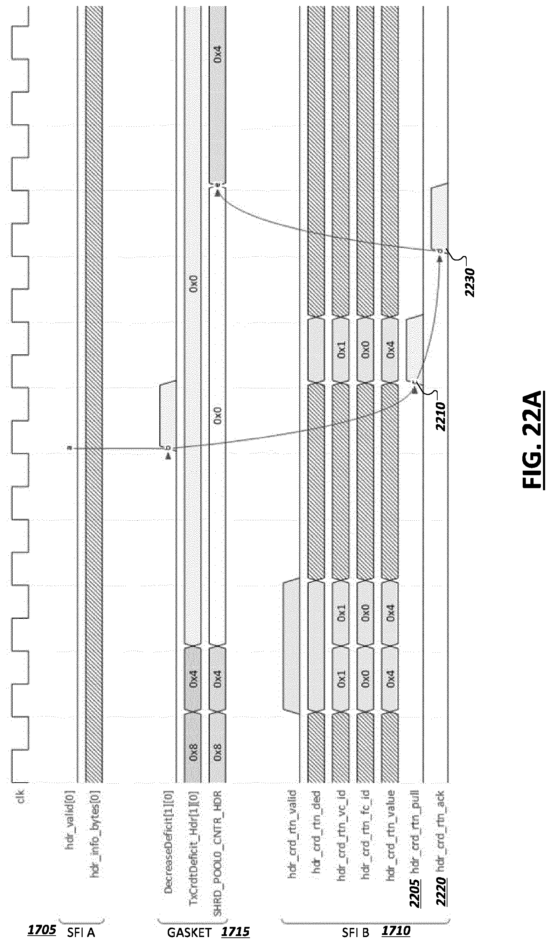

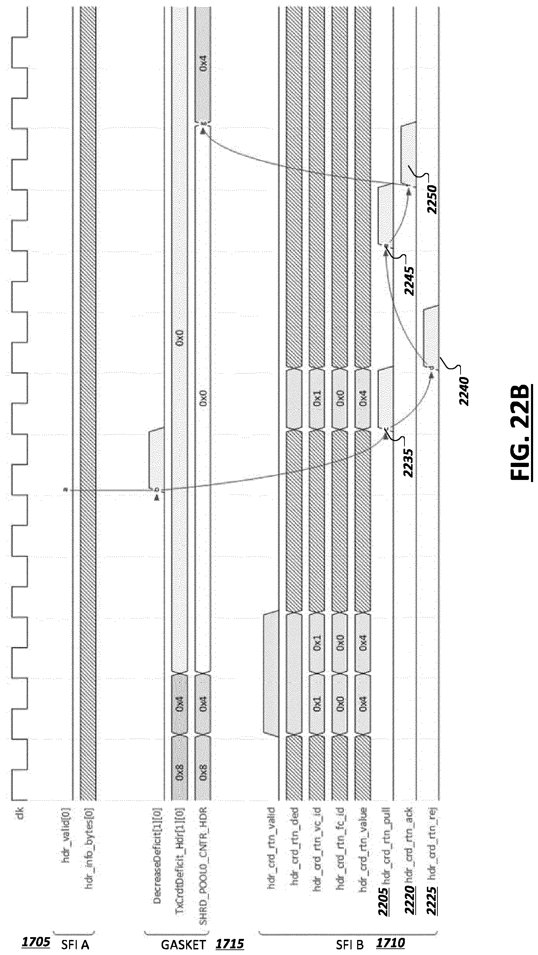

In cases where the credit gasket determines that the credits were initially overallocated to a given FC/VC, any credits that have already been released to an FC/VC that are going through a deficit reduction cannot be retrieved with existing SFI mechanics. If the implementation guarantees future packet transfers from the reduced FC/VC, it can choose to simply track that credit reduction and have it deducted from future credit returns. Alternatively, the credits may be retrieved on-demand in different ways with extensions of SFI. For instance, receiver-to-transmitter pull may be defined to incorporate new signals added to SFI to allow the receiver to request the credits back from the transmitter, and the transmitter to acknowledge the pull (or reduction). In one example, as shown in the example of FIG. 22A, a receiver 1710 may repurpose existing SFI credit return wires 2205 (e.g., *fc_id , *vc_id, *value, *ded, etc.) to signal (at 2210) to the transmitter 1705 that it wishes to reclaim previously advertised credits by asserting a new *crd_rtn_pull signal (e.g., instead of the existing *crd_rtn_valid). The transmitter 1705 may respond back to the pull request 2210 either with an acknowledge (e.g., using signal 2220) if the pull is successful or a reject (e.g., using signal 2225) if unsuccessful. On a successful acknowledge (e.g., at 2230), the receiver 1710 has reclaimed the previously assigned credits and can reassign them as needed. On an unsuccessful or rejected response, the receiver cannot reassign the credits, and may choose to reattempt the pull at a later time if conditions still apply. For instance, in the example of FIG. 22B, the receiver may request a credit deallocation (at 2235), which the transmitter 1705 may initially reject (at 2240), but then later retry (at 2245). This second credit deallocation request 2245 may be then acknowledged (at 2250) by the transmitter, allowing the receiver 1710 to then successful reclaiming the credit(s). Table 10 shows example SFI signals that may be utilized to facilitate receive credit pulls:

**TABLE 10: Example Credit Pull Signals**

| | | | |
|---|---|---|---|
| **hdr_crd_rtn_pull** | 1 bit | RX → TX | Credit pull. |
| **hdr_crd_rtn_pull_ack** | 1 bit | TX → RX | Credit pull acknowledge. |
| **hdr_crd_rtn_pull_rej** | 1 bit | TX → RX | Credit pull reject. |
| **data_crd_rtn_pull** | 1 bit | RX → TX | Credit pull. |
| **data_crd_rtn_pull_ack** | 1 bit | TX → RX | Credit pull acknowledge. |
| **data_crd_rtn_pull_rej** | 1 bit | TX → RX | Credit pull reject. |

In one example implementation, the wires used to implement signals 2205, 2220, 2225, etc. may be shared between credit returns and credit pulls, allowing only one of those two events to occur on any given cycle (e.g., *crd_rtn_pull and *crd_rtn_valid are mutually exclusive events) in such instances. As a result, in such implementations, the receiver 1710 may only have one outstanding pull request at a time. As an alternative implementations, deallocation of a credits from a FC/VC may instead be initiated by the transmitter, for instance through a transmitter-to-return credit return signal. For instance, a transmitter-to-return credit return signal may be added to SFI to allow a transmitter to initiate credit returns back to the receiver if it individually detects or predicts decreased activity. In some implementations, the transmitter-to-return credit return signal may mirror existing RX->TX credit return signals, but would be in the reverse direction. With this option, the receiver plays a more passive role in credit retrieval and relies on transmitter to self-monitor, among other example implementations.

### BUFFERLESS ARBITER

Traditional streaming interfaces, such as defined in existing versions of the SFI Specification, define 1-to-1 physical interfaces to couple a single transmitter with a single receiver. In some implementations, a 1-to-many streaming interface may be implemented utilizing an arbiter, or arbitration circuitry. A buffered arbiter may be developed to facilitate such interfaces, however, the use of a buffered arbiter may be area- and latency-intensive due to the store-and-forward architectures. For instance, a buffered arbiter stores and forwards MPS-sized credits in order to account for transmitters that may send packets whenever a credit is available and handle burst rules for the one-to-many interface, among other complexities. In an improved implementations, a bufferless arbiter may instead be utilized to enable I/O fabrics to implement 1-to-many connections using SFI mechanics without the use of buffers to store and forward. For instance, a bufferless arbiter may utilize established SFI mechanics of early valid, block, and data interleaving to allow many-to-one lightweight bufferless, time-division multiplexing without the need to store and forward. Indeed, a bufferless arbiter may represent a lightweight solution through a common interface that uses existing SFI interface mechanics and extremely low area fabric switches and assists in the scalability of system on chip (SoC) devices, among other example advantages.

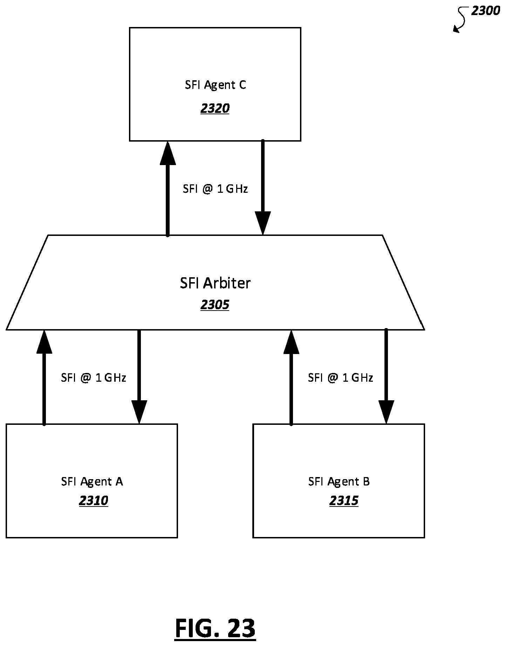

For instance, FIG. 23 is a simplified block diagram 2300 illustrating an example system, where an SFI arbiter 2305 is provided to enable multiple devices (e.g., 2310, 2315, 2320) while maintaining the streaming benefits of the SFI Specification. For instance, the arbiter 2305 can be implemented as a bufferless arbiter to establish 1-to-many SFI-compliant connections and thereby save on physical wire connections. The arbiter 2305 may use SFI mechanics to arbitrate between multiple agents (e.g., 2310, 2315, 2320, etc.) to avoid using buffers to store-and-forward. In the example of FIG. 23, the arbiter 2305 to establish upstream connections between SFI Agent A 2310 and SFI Agent C 2320 and SFI Agent B 2310 and SFI Agent C 2320, as well as downstream connections between SFI Agent C 2320 and SFI Agent A 2310 and SFI Agent C 2320 and SFI Agent B 2315. The arbiter may implement SFI early valid support, block support, and data interleaving support, among other example features. In one example, the arbiter may utilize early valid indications from an SFI Agent (e.g., on both HDR and DATA channels) to implement an arbitration request to use the corresponding SFI physical channel. Block assertions from the arbiter 2305 to an SFI Agent on both HDR and DATA channels may be used to stall transmission of packets until arbitration has been won. Data interleaving support by the receiver on the DATA channel may be used when arbitrating between concurrent active data streams from multiple SFI Agent transmitters. By utilizing this combination of features, an example SFI-compliant arbiter leverages the streaming benefits of SFI to eliminate the need for storage by ensuring no collisions between the different transmitters all while avoiding any additional latency. The arbiter 2305 may implement a variety of different arbitration algorithms, which may depend on quality of service and fairness policies of an application and may, in some cases, be configurable to allow different arbitration algorithms to be employed at different times within a system, among other example features.

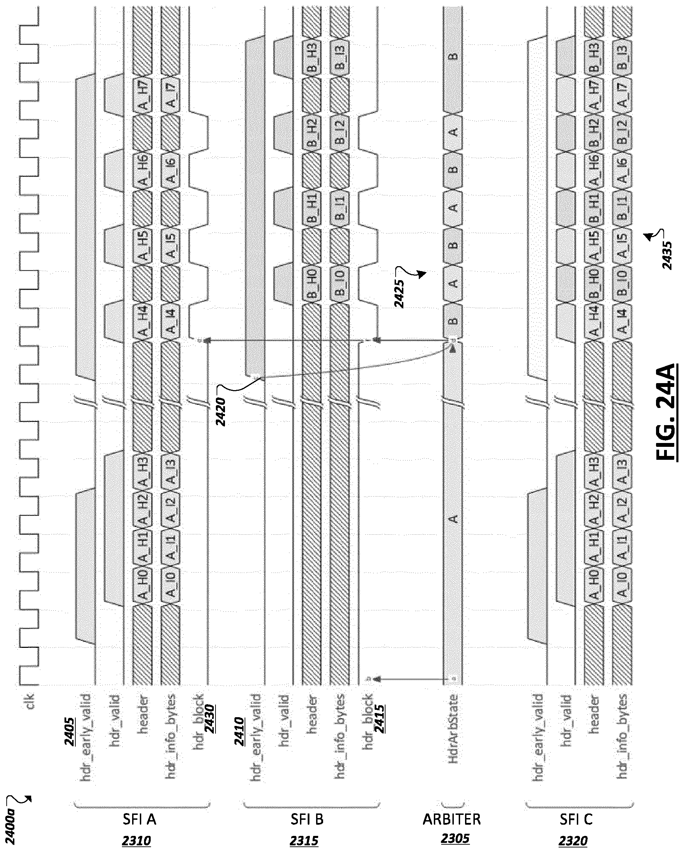

Turning to FIGS. 24A-24D, timing diagrams 2400a-d are shown to illustrate the example use of bufferless SFI arbiter circuitry (e.g., 2305) to implement a 1-to-many SFI interface (e.g., in an SoC, switch, network processing device, etc.). It should be appreciated that the 1-to-2 interface shown in the illustrations of FIGS. 23-24D is provided as a simplified example to illustrate general principles that may be employed within implementations of a bufferless streaming interface arbiter, including arbiters capable of greater interface multiples (e.g., 1-to-3, 1-to-4, 1-to-10, etc.). For instance, in the example of FIG. 24A, example scenarios where traffic in the upstream direction are shown, where SFI Agent A 2310 and SFI Agent B 2315 are transmitting headers towards SFI Agent C 2320. In this example, when only SFI Agent A 2310 is active and SFI Agent B is idle as indicated by the hdr_early_valid signals 2405, 2410, the arbiter grants SFI Agent A full bandwidth. This is achieved by maintaining a hdr_block signal 2415 for SFI Agent B as long as SFI Agent A has won arbitration. However, when both agents 2310, 2315 are active, such as shown through the assertion of both hdr_early_valid signals 2405, 2410 (at 2420), the arbiter alternates granting wins between the two agents (at 2425), and alternately sets and clears the hdr_block signals 2430, 2415 for the agents 2310, 2315 accordingly on each arbiter grant. This results in an efficiently utilized output stream 2435 to SFI Agent C 2320 that is able to service headers from both sources (e.g., 2310, 2315).

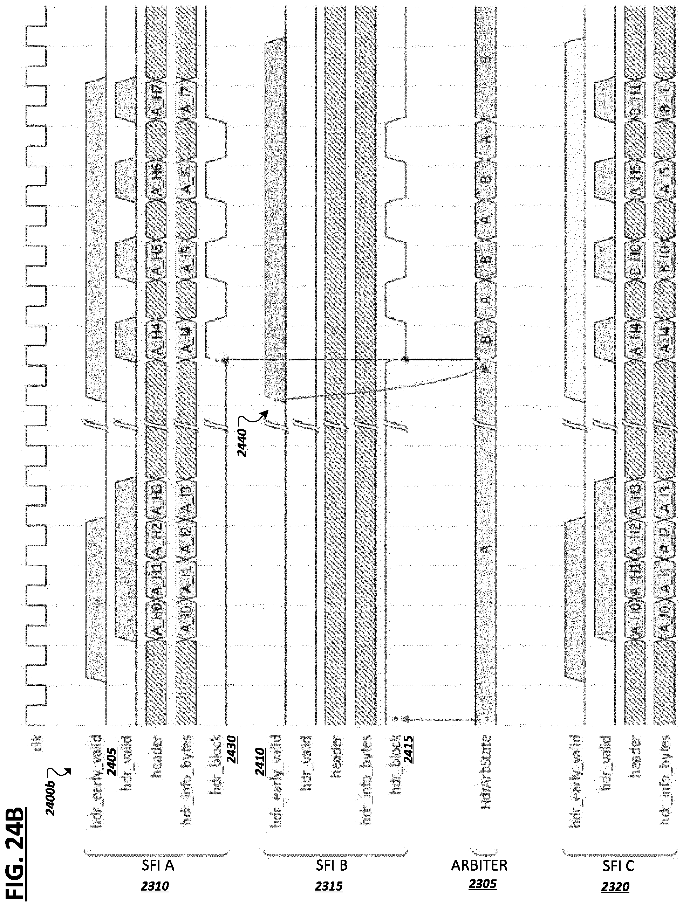

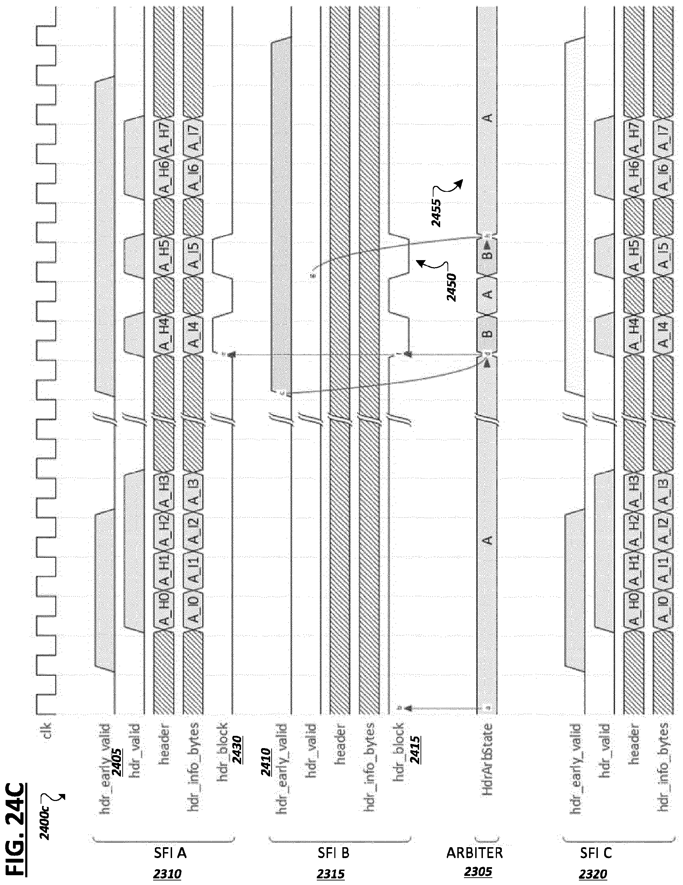

In implementations, where SFI's *_early_valid is used as an arbitration request, this may place an additional requirement on the SFI Transmitter to be more efficient with early valid assertion, particularly closer to the time of actual packet transmission, in order to risk efficiency loss. For instance, FIG. 24B shows an example, similar to the example of FIG. 24B, but where SFI Agent B 2315 is behaving greedily or otherwise inefficiently in its hdr_early_valid assertion, leaving its hdr_early_valid signal 2410 asserted even without transmitting any headers (e.g., 2440) when given the chance. This introduces bubbles in the output to SFI Agent C as the granted cycles to SFI Agent B are not being utilized for packet transmission. To counter such a situations, in some implementations, the arbiter may be equipped with logic to further detect such instances. For instance, in one example, the arbiter may maintain a counter that increments every cycle that is granted to an agent but is not utilized to send data (e.g., DATA or HDR data). A policy or threshold may be defined, such that when the arbiter counts a number of unused cycles (e.g., exceeding a programmable threshold), the arbiter may utilize the counter in connection with an arbitration algorithm that biases future arbitration determinations against the inefficient agent, which has "wasted" cycles granted to it. For instance, in the example of FIG. 24C, the arbiter 2305 may detect that SFI Agent B is asserting early valid, being granted arbitrated transmission cycles to send headers (e.g., at 2450), and wasting these opportunities in a repeated manner (e.g., failing to send a header in consecutive cycles, failing to send a header too many times over a particular duration, etc.). In response, the arbiter may not grant arbitration wins to the offending agent (e.g., SFI Agent B 2315 in this example), instead, diverting these cycles (at 2455) to other agents (e.g., SFI Agent A 2310) coupled to the arbiter.

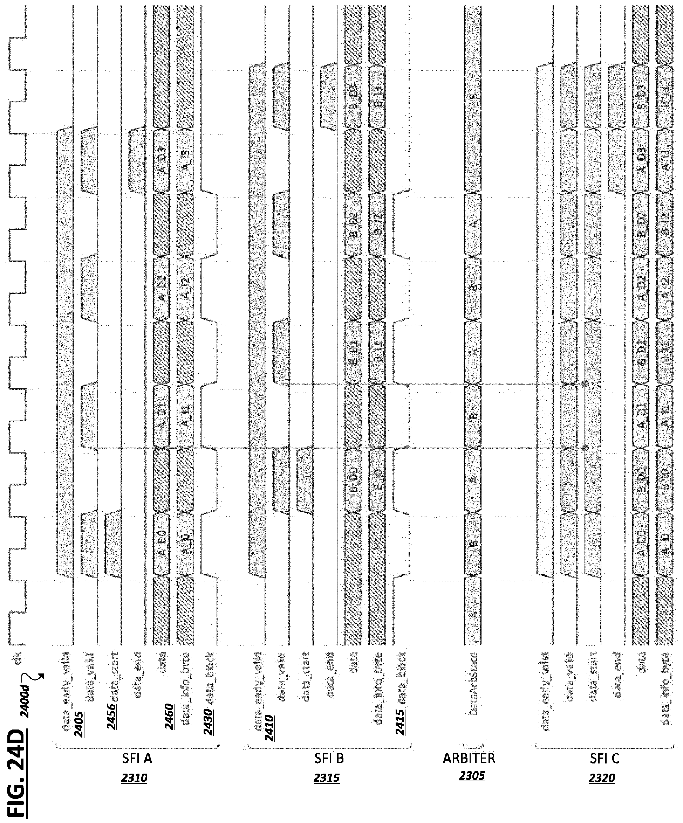

Similar principles may be applied to arbitrate 1-to-many DATA physical channel using a bufferless arbiter 2305, such as illustrated in the diagram 2400d of FIG. 24D. For instance, each SFI transmitter may provide FC/VC information at the start of a stream (e.g., as defined by the SFI Specification). Because the transmitter will be unaware of the arbiter interleaving streams between multiple sources, the arbiter may track the active data stream information and reassert data_start and data_info_bytes (e.g., at 2456, 2460) whenever alternating streams. In this example, the arbiter still uses data_early_valid (e.g., 2405, 2410) as an arbitration request and data_block (e.g., 2430, 2415) to stall transmission, but also reasserts data_start and data_info_byte with the streams' original information every time it switches between transmission of data from SFI Agent A and SFI Agent B, among other example implementations.

Note that the apparatus', methods', and systems described above may be implemented in any electronic device or system as aforementioned. As specific illustrations, the figures below provide exemplary systems (e.g., SoCs, computing blocks, fabric blocks, etc.) for utilizing the solutions described herein. As the systems below are described in more detail, a number of different interconnects, use cases, topologies, and applications are disclosed, described, and revisited from the discussion above. And as is readily apparent, the advances described above may be applied to any of those interconnects, fabrics, or architectures and their composite components.

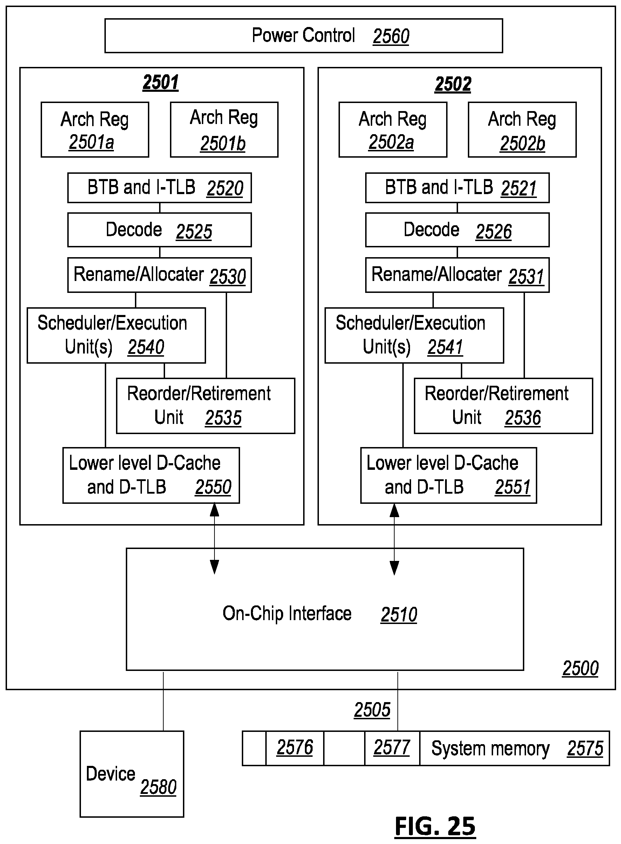

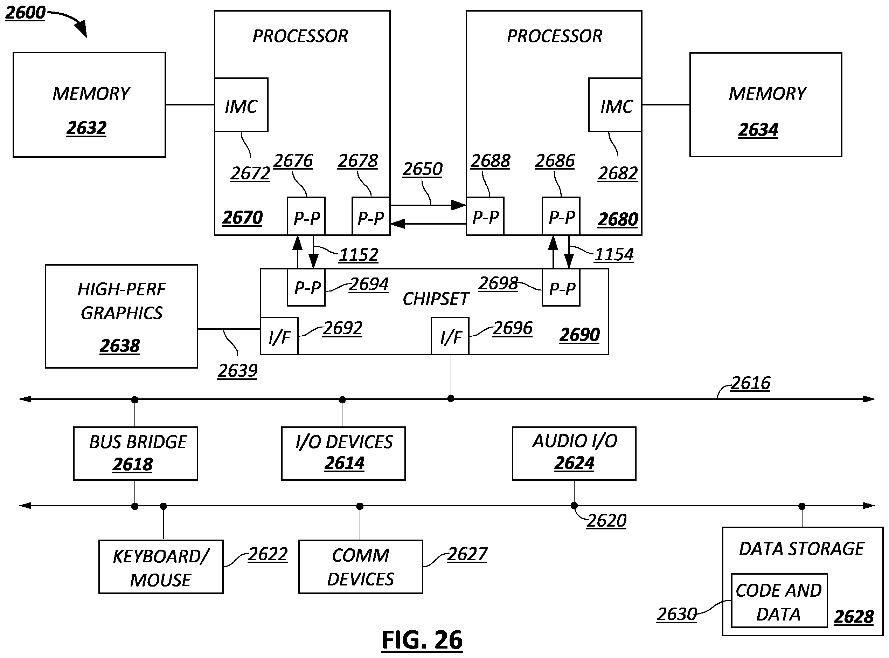

Note that the apparatus', methods', and systems described above may be implemented in any electronic device or system as aforementioned. For instance, the computing platforms illustrated in the examples of FIGS. 25 and 26 show connections between various computing devices at least a portion of which may be implemented using corresponding pass-through connector devices with socket connectors compatible with the two connected devices.

Referring to FIG. 25, an embodiment of a block diagram for a computing system including a multicore processor is depicted. Processor 2500 includes any processor or processing device, such as a microprocessor, an embedded processor, a digital signal processor (DSP), a network processor, a handheld processor, an application processor, a co-processor, a system on a chip (SOC), or other device to execute code. Processor 2500, in one embodiment, includes at least two cores-core 2501 and 2502, which may include asymmetric cores or symmetric cores (the illustrated embodiment). However, processor 2500 may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core often refers to logic located on an integrated circuit capable of maintaining an independent architectural state, wherein each independently maintained architectural state is associated with at least some dedicated execution resources. In contrast to cores, a hardware thread typically refers to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor 2500, as illustrated in FIG. 25, includes two cores-core 2501 and 2502. Here, core 2501 and 2502 are considered symmetric cores, e.g., cores with the same configurations, functional units, and/or logic. In another embodiment, core 2501 includes an out-of-order processor core, while core 2502 includes an in-order processor core. However, cores 2501 and 2502 may be individually selected from any type of core, such as a native core, a software managed core, a core adapted to execute a native Instruction Set Architecture (ISA), a core adapted to execute a translated Instruction Set Architecture (ISA), a co-designed core, or other known core. In a heterogeneous core environment (e.g., asymmetric cores), some form of translation, such a binary translation, may be utilized to schedule or execute code on one or both cores. Yet to further the discussion, the functional units illustrated in core 2501 are described in further detail below, as the units in core 2502 operate in a similar manner in the depicted embodiment.

As depicted, core 2501 includes two hardware threads 2501a and 2501b, which may also be referred to as hardware thread slots 2501a and 2501b. Therefore, software entities, such as an operating system, in one embodiment potentially view processor 2500 as four separate processors, e.g., four logical processors or processing elements capable of executing four software threads concurrently. As alluded to above, a first thread is associated with architecture state registers 2501a, a second thread is associated with architecture state registers 2501b, a third thread may be associated with architecture state registers 2502a, and a fourth thread may be associated with architecture state registers 2502b. Here, each of the architecture state registers (2501a, 2501b, 2502a, and 2502b) may be referred to as processing elements, thread slots, or thread units, as described above. As illustrated, architecture state registers 2501a are replicated in architecture state registers 2501b, so individual architecture states/contexts are capable of being stored for logical processor 2501a and logical processor 2501b. In core 2501, other smaller resources, such as instruction pointers and renaming logic in allocator and renamer block 2530 may also be replicated for threads 2501a and 2501b. Some resources, such as re-order buffers in reorder/retirement unit 2535, ILTB 2520, load/store buffers, and queues may be shared through partitioning. Other resources, such as general purpose internal registers, page-table base register(s), low-level data-cache and data-TLB 2515, execution unit(s) 2540, and portions of out-of-order unit 2535 are potentially fully shared.

Processor 2500 often includes other resources, which may be fully shared, shared through partitioning, or dedicated by/to processing elements. In FIG. 25, an embodiment of a purely exemplary processor with illustrative logical units/resources of a processor is illustrated. Note that a processor may include, or omit, any of these functional units, as well as include any other known functional units, logic, or firmware not depicted. As illustrated, core 2501 includes a simplified, representative out-of-order (OOO) processor core. But an in-order processor may be utilized in different embodiments. The OOO core includes a branch target buffer 2520 to predict branches to be executed/taken and an instruction-translation buffer (I-TLB) 2520 to store address translation entries for instructions.

Core 2501 further includes decode module 2525 coupled to fetch unit 2520 to decode fetched elements. Fetch logic, in one embodiment, includes individual sequencers associated with thread slots 2501a, 2501b, respectively. Usually core 2501 is associated with a first ISA, which defines/specifies instructions executable on processor 2500. Often machine code instructions that are part of the first ISA include a portion of the instruction (referred to as an opcode), which references/specifies an instruction or operation to be performed. Decode logic 2525 includes circuitry that recognizes these instructions from their opcodes and passes the decoded instructions on in the pipeline for processing as defined by the first ISA. For example, as discussed in more detail below decoders 2525, in one embodiment, include logic designed or adapted to recognize specific instructions, such as transactional instruction. As a result of the recognition by decoders 2525, the architecture or core 2501 takes specific, predefined actions to perform tasks associated with the appropriate instruction. It is important to note that any of the tasks, blocks, operations, and methods described herein may be performed in response to a single or multiple instructions; some of which may be new or old instructions. Note decoders 2526, in one embodiment, recognize the same ISA (or a subset thereof). Alternatively, in a heterogeneous core environment, decoders 2526 recognize a second ISA (either a subset of the first ISA or a distinct ISA).

In one example, allocator and renamer block 2530 includes an allocator to reserve resources, such as register files to store instruction processing results. However, threads 2501a and 2501b are potentially capable of out-of-order execution, where allocator and renamer block 2530 also reserves other resources, such as reorder buffers to track instruction results. Unit 2530 may also include a register renamer to rename program/instruction reference registers to other registers internal to processor 2500. Reorder/retirement unit 2535 includes components, such as the reorder buffers mentioned above, load buffers, and store buffers, to support out-of-order execution and later in-order retirement of instructions executed out-of-order.

Scheduler and execution unit(s) block 2540, in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) 2550 are coupled to execution unit(s) 2540. The data cache is to store recently used/operated-on elements, such as data operands, which are potentially held in memory coherency states. The D-TLB is to store recent virtual/linear to physical address translations. As a specific example, a processor may include a page table structure to break physical memory into a plurality of virtual pages.

Here, cores 2501 and 2502 share access to higher-level or further-out cache, such as a second level cache associated with on-chip interface 2510. Note that higher-level or further-out refers to cache levels increasing or getting further way from the execution unit(s). In one embodiment, higher-level cache is a last-level data cache-last cache in the memory hierarchy on processor 2500-such as a second or third level data cache. However, higher level cache is not so limited, as it may be associated with or include an instruction cache. A trace cache-a type of instruction cache-instead may be coupled after decoder 2525 to store recently decoded traces. Here, an instruction potentially refers to a macro-instruction (e.g., a general instruction recognized by the decoders), which may decode into a number of micro-instructions (micro-operations).

In the depicted configuration, processor 2500 also includes on-chip interface module 2510. Historically, a memory controller, which is described in more detail below, has been included in a computing system external to processor 2500. In this scenario, on-chip interface 2510 is to communicate with devices external to processor 2500, such as system memory 2575, a chipset (often including a memory controller hub to connect to memory 2575 and an I/O controller hub to connect peripheral devices), a memory controller hub, a northbridge, or other integrated circuit. And in this scenario, bus 2505 may include any known interconnect, such as multi-drop bus, a point-to-point interconnect, a serial interconnect, a parallel bus, a coherent (e.g. cache coherent) bus, a layered protocol architecture, a differential bus, and a GTL bus.

Memory 2575 may be dedicated to processor 2500 or shared with other devices in a system. Common examples of types of memory 2575 include DRAM, SRAM, non-volatile memory (NV memory), and other known storage devices. Note that device 2580 may include a graphic accelerator, processor or card coupled to a memory controller hub, data storage coupled to an I/O controller hub, a wireless transceiver, a flash device, an audio controller, a network controller, or other known device.

Recently however, as more logic and devices are being integrated on a single die, such as SOC, each of these devices may be incorporated on processor 2500. For example in one embodiment, a memory controller hub is on the same package and/or die with processor 2500. Here, a portion of the core (an on-core portion) 2510 includes one or more controller(s) for interfacing with other devices such as memory 2575 or a graphics device 2580. The configuration including an interconnect and controllers for interfacing with such devices is often referred to as an on-core (or un-core configuration). As an example, on-chip interface 2510 includes a ring interconnect for on-chip communication and a high-speed serial point-to-point link 2505 for offchip communication. Yet, in the SOC environment, even more devices, such as the network interface, co-processors, memory 2575, graphics processor 2580, and any other known computer devices/interface may be integrated on a single die or integrated circuit to provide small form factor with high functionality and low power consumption.

In one embodiment, processor 2500 is capable of executing a compiler, optimization, and/or translator code 2577 to compile, translate, and/or optimize application code 2576 to support the apparatus and methods described herein or to interface therewith. A compiler often includes a program or set of programs to translate source text/code into target text/code. Usually, compilation of program/application code with a compiler is done in multiple phases and passes to transform hi-level programming language code into low-level machine or assembly language code. Yet, single pass compilers may still be utilized for simple compilation. A compiler may utilize any known compilation techniques and perform any known compiler operations, such as lexical analysis, preprocessing, parsing, semantic analysis, code generation, code transformation, and code optimization.

Larger compilers often include multiple phases, but most often these phases are included within two general phases: (1) a front-end, e.g., generally where syntactic processing, semantic processing, and some transformation/optimization may take place, and (2) a back-end, e.g., generally where analysis, transformations, optimizations, and code generation takes place. Some compilers refer to a middle, which illustrates the blurring of delineation between a front-end and back end of a compiler. As a result, reference to insertion, association, generation, or other operation of a compiler may take place in any of the aforementioned phases or passes, as well as any other known phases or passes of a compiler. As an illustrative example, a compiler potentially inserts operations, calls, functions, etc. in one or more phases of compilation, such as insertion of calls/operations in a front-end phase of compilation and then transformation of the calls/operations into lower-level code during a transformation phase. Note that during dynamic compilation, compiler code or dynamic optimization code may insert such operations/calls, as well as optimize the code for execution during runtime. As a specific illustrative example, binary code (already compiled code) may be dynamically optimized during runtime. Here, the program code may include the dynamic optimization code, the binary code, or a combination thereof.

Similar to a compiler, a translator, such as a binary translator, translates code either statically or dynamically to optimize and/or translate code. Therefore, reference to execution of code, application code, program code, or other software environment may refer to: (1) execution of a compiler program(s), optimization code optimizer, or translator either dynamically or statically, to compile program code, to maintain software structures, to perform other operations, to optimize code, or to translate code; (2) execution of main program code including operations/calls, such as application code that has been optimized/compiled; (3) execution of other program code, such as libraries, associated with the main program code to maintain software structures, to perform other software related operations, or to optimize code; or (4) a combination thereof.

Referring now to FIG. 26, shown is a block diagram of a second system 2600 in accordance with an embodiment of the present disclosure. As shown in FIG. 26, multiprocessor system 2600 is a point-to-point interconnect system, and includes a first processor 2670 and a second processor 2680 coupled via a point-to-point interconnect 2650. Each of processors 2670 and 2680 may be some version of a processor. In one embodiment, 2652 and 2654 are part of a serial, point-to-point coherent interconnect fabric, such as CXL, QPI, or UPI, among other examples.

While shown with only two processors 2670, 2680, it is to be understood that the scope of the present disclosure is not so limited. In other embodiments, one or more additional processors may be present in a given processor.

Processors 2670 and 2680 are shown including integrated memory controller units 2672 and 2682, respectively. Processor 2670 also includes as part of its bus controller units point-to-point (P-P) interfaces 2676 and 2678; similarly, second processor 2680 includes P-P interfaces 2686 and 2688. Processors 2670, 2680 may exchange information via a point-to-point (P-P) interface 2650 using P-P interface circuits 2678, 2688. As shown in FIG. 26, IMCs 2672 and 2682 couple the processors to respective memories, namely a memory 2632 and a memory 2634, which may be portions of main memory locally attached to the respective processors.

Processors 2670, 2680 each exchange information with a chipset 2690 via individual P-P interfaces 2652, 2654 using point to point interface circuits 2676, 2694, 2686, 2698. Chipset 2690 also exchanges information with a high-performance graphics circuit 2638 via an interface circuit 2692 along a high-performance graphics interconnect 2639.

A shared cache (not shown) may be included in either processor or outside of both processors; yet connected with the processors via P-P interconnect, such that either or both processors' local cache information may be stored in the shared cache if a processor is placed into a low power mode.

Chipset 2690 may be coupled to a first bus 2616 via an interface 2696. In one embodiment, first bus 2616 may be a Peripheral Component Interconnect (PCI) bus, or a bus such as a PCIe bus or another third generation I/O interconnect bus, although the scope of the present disclosure is not so limited.

As shown in FIG. 26, various I/O devices 2614 are coupled to first bus 2616, along with a bus bridge 2618 which couples first bus 2616 to a second bus 2620. In one embodiment, second bus 2620 includes a low pin count (LPC) bus. Various devices are coupled to second bus 2620 including, for example, a keyboard and/or mouse 2622, communication devices 2627 and a storage unit 2628 such as a disk drive or other mass storage device which often includes instructions/code and data 2630, in one embodiment. Further, an audio I/O 2624 is shown coupled to second bus 2620. Note that other architectures are possible, where the included components and interconnect architectures vary. For example, instead of the point-to-point architecture of FIG. 26, a system may implement a multi-drop bus or other such architecture.

Computing systems can include various combinations of components. These components may be implemented as ICs, portions thereof, discrete electronic devices, or other modules, logic, hardware, software, firmware, or a combination thereof adapted in a computer system, or as components otherwise incorporated within a chassis of the computer system. However, it is to be understood that some of the components shown may be omitted, additional components may be present, and different arrangement of the components shown may occur in other implementations. As a result, the solutions described above may be implemented in any portion of one or more of the interconnects illustrated or described herein.

A processor, in one embodiment, includes a microprocessor, multi-core processor, multithreaded processor, an ultra low voltage processor, an embedded processor, or other known processing element. In the illustrated implementation, processor acts as a main processing unit and central hub for communication with many of the various components of the system. As one example, processor is implemented as a system on a chip (SoC). As a specific illustrative example, processor includes an Intel^{®} Architecture Core^{™}-based processor such as an i3, i5, i7 or another such processor available from Intel Corporation. However, understand that other low power processors such as available from Advanced Micro Devices, Inc. (AMD) of Sunnyvale, CA, a MIPS-based design from MIPS Technologies, Inc. of Sunnyvale, CA, an ARM-based design licensed from ARM Holdings, Ltd. or customer thereof, or their licensees or adopters may instead be present in other embodiments such as an Apple A5/A6 processor, a Qualcomm Snapdragon processor, or TI OMAP processor. Note that many of the customer versions of such processors are modified and varied; however, they may support or recognize a specific instruction set that performs defined algorithms as set forth by the processor licensor. Here, the microarchitectural implementation may vary, but the architectural function of the processor is usually consistent. Certain details regarding the architecture and operation of processor in one implementation will be discussed further below to provide an illustrative example.

Processor, in one embodiment, communicates with a system memory. As an illustrative example, which in an embodiment can be implemented via multiple memory devices to provide for a given amount of system memory. As examples, the memory can be in accordance with a Joint Electron Devices Engineering Council (JEDEC) low power double data rate (LPDDR)-based design such as the current LPDDR2 standard according to JEDEC JESD 209-2E (published April 2009), or a next generation LPDDR standard to be referred to as LPDDR3 or LPDDR4 that will offer extensions to LPDDR2 to increase bandwidth. In various implementations the individual memory devices may be of different package types such as single die package (SDP), dual die package (DDP) or quad die package (13P). These devices, in some embodiments, are directly soldered onto a motherboard to provide a lower profile solution, while in other embodiments the devices are configured as one or more memory modules that in turn couple to the motherboard by a given connector. And of course, other memory implementations are possible such as other types of memory modules, e.g., dual inline memory modules (DIMMs) of different varieties including but not limited to microDIMMs, MiniDIMMs. In a particular illustrative embodiment, memory is sized between 2GB and 16GB, and may be configured as a DDR3LM package or an LPDDR2 or LPDDR3 memory that is soldered onto a motherboard via a ball grid array (BGA).

To provide for persistent storage of information such as data, applications, one or more operating systems and so forth, a mass storage may also couple to processor. In various embodiments, to enable a thinner and lighter system design as well as to improve system responsiveness, this mass storage may be implemented via a SSD. However in other embodiments, the mass storage may primarily be implemented using a hard disk drive (HDD) with a smaller amount of SSD storage to act as a SSD cache to enable non-volatile storage of context state and other such information during power down events so that a fast power up can occur on re-initiation of system activities. A flash device may be coupled to processor, e.g., via a serial peripheral interface (SPI). This flash device may provide for non-volatile storage of system software, including a basic input/output software (BIOS) as well as other firmware of the system.

In various embodiments, mass storage of the system is implemented by a SSD alone or as a disk, optical or other drive with an SSD cache. In some embodiments, the mass storage is implemented as a SSD or as a HDD along with a restore (RST) cache module. In various implementations, the HDD provides for storage of between 320GB-4 terabytes (TB) and upward while the RST cache is implemented with a SSD having a capacity of 24GB-256GB. Note that such SSD cache may be configured as a single level cache (SLC) or multi-level cache (MLC) option to provide an appropriate level of responsiveness. In a SSD-only option, the module may be accommodated in various locations such as in a mSATA or NGFF slot. As an example, an SSD has a capacity ranging from 120GB-1TB.

While the present disclosure has been described with respect to a limited number of embodiments, those skilled in the art will appreciate numerous modifications and variations therefrom. It is intended that the appended claims cover all such modifications and variations as fall within the true spirit and scope of this present disclosure.

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase `to' or `configured to,' in one embodiment, refers to arranging, putting together, manufacturing, offering to sell, importing and/or designing an apparatus, hardware, logic, or element to perform a designated or determined task. In this example, an apparatus or element thereof that is not operating is still `configured to' perform a designated task if it is designed, coupled, and/or interconnected to perform said designated task. As a purely illustrative example, a logic gate may provide a 0 or a 1 during operation. But a logic gate `configured to' provide an enable signal to a clock does not include every potential logic gate that may provide a 1 or 0. Instead, the logic gate is one coupled in some manner that during operation the 1 or 0 output is to enable the clock. Note once again that use of the term `configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases `capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example, the decimal number ten may also be represented as a binary value of 2510 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, e.g., reset, while an updated value potentially includes a low logical value, e.g., set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (e.g., stores and/or transmits) information in a form readable by a machine, such as a computer or electronic system. For example, a non-transitory machine-accessible medium includes randomaccess memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

The following examples pertain to embodiments in accordance with this Specification. Example 1 is an apparatus including: protocol circuitry to implement an input/output (I/O) interconnect protocol, where the I/O interconnect protocol includes a flit mode and a non-flit mode, where a set of flit mode header formats are used when in the flit mode and a set of non-flit mode header formats are used when in the non-flit mode, and the set of non-flit mode header formats include one or more non-flit mode fields; and interface circuitry to implement an interface to couple to a fabric, where the interface circuitry is to: determine that a link is trained to the non-flit mode; generate a header according to the set of flit mode header formats, where the header includes a field to indicate that a corresponding packet originated as a non-flit mode packet, and one or more fields of the set of flit mode header formats are repurposed in the header to carry the one or more non-flit mode fields; and send the header over the interface.

Example 2 includes the subject matter of example 1, where the one or more non-flit mode fields are not included in the set of flit mode header formats.

Example 3 includes the subject matter of any one of examples 1-2, where the I/O interconnect protocol includes a load/store interconnection protocol.

Example 4 includes the subject matter of example 3, where the I/O interconnect protocol includes one of a Peripheral Component Interconnect Express (PCIe)-based protocol or a Compute Express Link (CXL)-based protocol.

Example 5 includes the subject matter of any one of examples 1-4, where the interface includes: a header channel implemented on a first subset of a plurality of physical lanes, where the first subset of lanes includes first lanes to carry packet headers based on the interconnect protocol and second lanes to carry metadata for the packet headers; and a data channel implemented on a separate second subset of the plurality of physical lanes, where the second subset of lanes includes third lanes to carry a packet payloads and fourth lanes to carry metadata for the packet payloads, where the header is sent over the header channel.

Example 6 includes the subject matter of any one of examples 1-5, where the flit mode and the non-flit mode are based on a PCIe-based protocol.

Example 7 includes the subject matter of example 6, where the one or more non-flit mode fields are carried in the one or more fields of the set of flit mode header formats based on a mapping.

Example 8 includes the subject matter of any one of examples 6-7, where the set of flit mode header formats include one or more orthogonal content headers and a particular field in a particular one of the one or more orthogonal content headers is to carry a particular field in the one or more non-flit mode fields.

Example 9 includes the subject matter of any one of examples 6-8, where the set of flit mode header formats include one or more prefixes and a particular field in a particular one of the one or more prefixes is to carry a particular field in the one or more non-flit mode fields.

Example 10 includes the subject matter of example 9, where the particular prefix includes a mode field to indicate that the corresponding packet originated as a non-flit mode packet.

Example 11 includes the subject matter of any one of examples 1-10, where end-to-end encryption is to be provided on the link based on the flit mode.

Example 12 includes the subject matter of any one of examples 1-11, where the interface is based on a Streaming Fabric Interface (SFI) specification.

Example 13 is a method including: identifying a header of a packet, where the header of the packet is based on a non-flit mode format of a load/store interconnect protocol, where the load/store interconnect protocol further defines a flit mode; generating a flit mode version of the header of the packet, where the flit mode version of the header of the packet is based on a flit mode format, a first subset of fields in the non-flit mode format are also provided in the flit mode format, and a second subset of fields in the non-flit mode format are excluded in the flit mode format, where generating the flit mode version of the header of the packet includes carrying one or more fields in the second subset of fields in repurposed fields defined in the flit mode format; sending the flit mode version of the header of the packet to a fabric over an interface, where the flit mode version of the header of the packet is sent on a header channel implemented on a first plurality of physical lanes; and sending payload data of the packet to the fabric over the interface, where the payload data of the packet is sent over a data channel implemented on a separate, second plurality of physical lanes.

Example 14 includes the subject matter of example 13, where the interface is defined according to an SFI specification and the load/store protocol includes one of PCIe or CXL.io.

Example 15 includes the subject matter of any one of examples 13-14, where the flit mode version of the header of the packet is sent on a first subset of the first plurality of physical lanes, and the method includes: sending header metadata on the interface using a second subset of the second plurality of physical lanes of the header channel.

Example 16 includes the subject matter of any one of examples 13-15, where the interface includes: a header channel implemented on a first subset of a plurality of physical lanes, where the first subset of lanes includes first lanes to carry packet headers based on the interconnect protocol and second lanes to carry metadata for the packet headers; and a data channel implemented on a separate second subset of the plurality of physical lanes, where the second subset of lanes includes third lanes to carry a packet payloads and fourth lanes to carry metadata for the packet payloads, where the header is sent over the header channel.

Example 17 includes the subject matter of any one of examples 13-16, where the flit mode and the non-flit mode are based on a PCIe-based protocol.

Example 18 includes the subject matter of example 17, where the second subset of fields are carried in the one or more fields of the set of flit mode header formats based on a mapping.

Example 19 includes the subject matter of any one of examples 17-18, where the set of flit mode header formats include one or more orthogonal content headers and a particular field in a particular one of the one or more orthogonal content headers is to carry a particular field in the second subset of fields.

Example 20 includes the subject matter of any one of examples 17-19, where the set of flit mode header formats include one or more prefixes and a particular field in a particular one of the one or more prefixes is to carry a particular field in the second subset of fields.

Example 21 includes the subject matter of example 20, where the particular prefix includes a mode field to indicate that the corresponding packet originated as a non-flit mode packet.

Example 22 includes the subject matter of any one of examples 13-21, further including providing end-to-end encryption based on the flit mode.

Example 23 is a system including means to perform the method of any one of examples 13-22.

Example 24 is a system including: a fabric; and a plurality of compute blocks communicatively coupled through the fabric, where a particular compute block in the plurality of compute blocks includes: agent circuitry to support a load/store interconnect protocol; and interface circuitry to implement an interface to couple to the fabric, where the interface circuitry is to: determine that a link is trained to the non-flit mode; generate a header according to the set of flit mode header formats, where the header includes a field to indicate that a corresponding packet originated as a non-flit mode packet, and one or more fields of the set of flit mode header formats is repurposed in the header to carry the one or more non-flit mode fields; and send the header over the interface.

Example 25 includes the subject matter of example 24, further including a bufferless arbiter to facilitate a one-to-many connection on the interface.

Example26 includes the subject matter of any one of examples 24-25, further including a credit gasket to convert dedicated credits used by a transmitter on a first one of the compute blocks to shared credits used by a receiver on a second one of the compute blocks.

Example 27 includes the subject matter of any one of examples 24-26, where the fabric includes an interconnect fabric of a system on chip (SoC) device, and the SoC device includes the plurality of compute blocks.

Example 28 includes the subject matter of any one of examples 24-27, where the interface includes a header channel including a set of dedicated physical lanes to communicate packet headers, and the flit mode is to be used for headers communicated on the header channel.

Example 29 is an apparatus including: fabric circuitry to implement a fabric, where the fabric is to support communications according to an input/output (I/O) interconnect protocol, where the I/O interconnect protocol includes a flit mode and a non-flit mode, where a set of flit mode header formats are used when in the flit mode and a set of non-flit mode header formats are used when in the non-flit mode, and the set of non-flit mode header formats include one or more non-flit mode fields; and interface circuitry to implement an interface to couple to an agent, where the interface circuitry is to: determine that a link is trained to the non-flit mode; generate a header according to the set of flit mode header formats, where the header includes a field to indicate that a corresponding packet originated as a non-flit mode packet, and one or more fields of the set of flit mode header formats are repurposed in the header to carry the one or more non-flit mode fields; and send the header over the interface.

Example 30 includes the subject matter of example 29, where the one or more non-flit mode fields are not included in the set of flit mode header formats.

Example 31 includes the subject matter of any one of examples 29-30, where the I/O interconnect protocol includes a load/store interconnection protocol.

Example 32 includes the subject matter of example 31, where the I/O interconnect protocol includes one of a Peripheral Component Interconnect Express (PCIe)-based protocol or a Compute Express Link (CXL)-based protocol.

Example 33 includes the subject matter of any one of examples 29-32, where the interface includes: a header channel implemented on a first subset of a plurality of physical lanes, where the first subset of lanes includes first lanes to carry packet headers based on the interconnect protocol and second lanes to carry metadata for the packet headers; and a data channel implemented on a separate second subset of the plurality of physical lanes, where the second subset of lanes includes third lanes to carry a packet payloads and fourth lanes to carry metadata for the packet payloads, where the header is sent over the header channel.

Example 34 includes the subject matter of any one of examples 29-33, where the flit mode and the non-flit mode are based on a PCIe-based protocol.

Example 35 includes the subject matter of example 34, where the one or more non-flit mode fields are carried in the one or more fields of the set of flit mode header formats based on a mapping.

Example 36 includes the subject matter of any one of examples 34-35, where the set of flit mode header formats include one or more orthogonal content headers and a particular field in a particular one of the one or more orthogonal content headers is to carry a particular field in the one or more non-flit mode fields.

Example 37 includes the subject matter of any one of examples 34-36, where the set of flit mode header formats include one or more prefixes and a particular field in a particular one of the one or more prefixes is to carry a particular field in the one or more non-flit mode fields.

Example 38 includes the subject matter of example 37, where the particular prefix includes a mode field to indicate that the corresponding packet originated as a non-flit mode packet.

Example 39 includes the subject matter of any one of examples 34-38, where end-to-end encryption is to be provided on the link based on the flit mode.

Example 40 includes the subject matter of any one of examples 34-39, where the interface is based on a Streaming Fabric Interface (SFI) specification.

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the broader spirit and scope as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

## Claims

1. A method comprising:
identifying a header of a packet, wherein the header of the packet is based on a non-flit mode format of a load/store interconnect protocol, wherein the load/store interconnect protocol further defines a flit mode;
generating a flit mode version of the header of the packet, wherein the flit mode version of the header of the packet is based on a flit mode format, a first subset of fields in the non-flit mode format are also provided in the flit mode format, and a second subset of fields in the non-flit mode format are excluded in the flit mode format, wherein generating the flit mode version of the header of the packet comprises carrying one or more fields in the second subset of fields in repurposed fields defined in the flit mode format;
sending the flit mode version of the header of the packet to a fabric over an interface, wherein the flit mode version of the header of the packet is sent on a header channel implemented on a first plurality of physical lanes; and
sending payload data of the packet to the fabric over the interface, wherein the payload data of the packet is sent over a data channel implemented on a separate, second plurality of physical lanes.

2. The method of Claim 1, wherein the interface is defined according to an SFI specification and the load/store protocol comprises one of PCIe or CXL.io.

3. The method of any one of Claims 1-2, wherein the flit mode version of the header of the packet is sent on a first subset of the first plurality of physical lanes, and the method comprises:
sending header metadata on the interface using a second subset of the second plurality of physical lanes of the header channel.

4. The method of any one of Claims 1-3, wherein the interface comprises:
a header channel implemented on a first subset of a plurality of physical lanes, wherein the first subset of lanes comprises first lanes to carry packet headers based on the interconnect protocol and second lanes to carry metadata for the packet headers; and
a data channel implemented on a separate second subset of the plurality of physical lanes, wherein the second subset of lanes comprises third lanes to carry a packet payloads and fourth lanes to carry metadata for the packet payloads,
wherein the header is sent over the header channel.

5. The method of any one of Claims 1-4, wherein the flit mode and the non-flit mode are based on a PCIe-based protocol.

6. The method of Claim 5, wherein the second subset of fields are carried in the one or more fields of the set of flit mode header formats based on a mapping.

7. The method of any one of Claims 5-6, wherein the set of flit mode header formats comprise one or more orthogonal content headers and a particular field in a particular one of the one or more orthogonal content headers is to carry a particular field in the second subset of fields.

8. The method of any one of Claims 5-7, wherein the set of flit mode header formats comprise one or more prefixes and a particular field in a particular one of the one or more prefixes is to carry a particular field in the second subset of fields.

9. The method of Claim 8, wherein the particular prefix comprises a mode field to indicate that the corresponding packet originated as a non-flit mode packet.

10. The method of any one of Claims 1-9, further comprising providing end-to-end encryption based on the flit mode.

11. Machine-readable storage including machine-readable instructions, when executed, cause the computer/transmitter/receiver to implement a method as claimed in any preceding claim.

12. A computer program comprising instructions which, when the program is executed by a computer, cause the computer to carry out the method as claimed in any preceding claim.
